# EUROPEAN PATENT SPECIFICATION

(11) **EP 1 515 518 B1**
(45) Date of publication and mention of the grant of the patent: **02.11.2011**
(21) Application number: 04255500.3
(22) Date of filing: 10.09.2004
(51) Int. Cl.: H04L 29/06

(54) **Method of setting digital certificate to authenticate communication apparatus**
Verfahren zum Setzen eines digitalen Zertifikats für die Authentifizierung eines Kommunikationsapparats
Méthode de réglage de certificat numérique pour authentifier l'appareil de communication

(30) Priority: 12.09.2003 JP 2003321804; 20.07.2004 JP 2004211423
(43) Date of publication of application: 16.03.2005
(73) Proprietor: Ricoh Company, Ltd., Tokyo 143-8555 (JP)
(72) Inventor: Imai, Tatsuya, Tokyo (JP)
(74) Representative: Mounteney, Simon James

(56) References cited:
- EP-A- 1 096 721
- US-A1- 2002 152 382

## Description

### BACKGROUND OF THE INVENTION

### 1. Field of the Invention

The present invention relates to a method of setting a digital certificate to authenticate a communication apparatus.

### 2. Description of the Related Art

Conventionally, a variety of communication systems have been constructed to have structure in which one or more communication apparatuses having respective communication functions are connected to communicate each other via networks. For example, such systems include a so-called "electric commerce system". In an electric commerce system, orders for commodities are sent from computers, such as personal computers (PCs), working as client apparatuses, and these orders are received at server apparatuses capable of communication to PCs via the Internet. Also, a remote management system for electronic apparatuses is proposed. In such a system, various types of electronic apparatuses, some of which work as client apparatuses and others of which work as server apparatuses, are connected via a network and are managed through mutual communication.

In construction of such a system, when an entity attempts to communicate to another entity, it is indispensable to check whether these entities are appropriate communicating parties and additionally whether transmitted information has been not tampered. Especially, in case of communication via the Internet, information is often routed through irrelevant computers until the information reaches the communicating parties. Thus, it is necessary to prevent contents of confidential information from being eavesdropped during transmission thereof. A communication protocol such as SSL (Secure Socket Layer) has been designed and widely used for that need. In communication in compliance with this protocol, if a communicating party is authenticated and information contents are encrypted in accordance with a combination of public-key cryptography and common-key cryptography, it is possible to properly prevent such tempering and eavesdropping. Also, a destination apparatus can authenticate a source apparatus requesting the communication.

For example, Japanese Laid-Open Patent Applications No. 2002-353959 and No. 2002-251492 disclose techniques related to authentication based on SSL and public-key cryptography.

Now, an exemplary communication procedure of cross-certification in compliance with SSL is described wherein an authentication process portion thereof is focused.

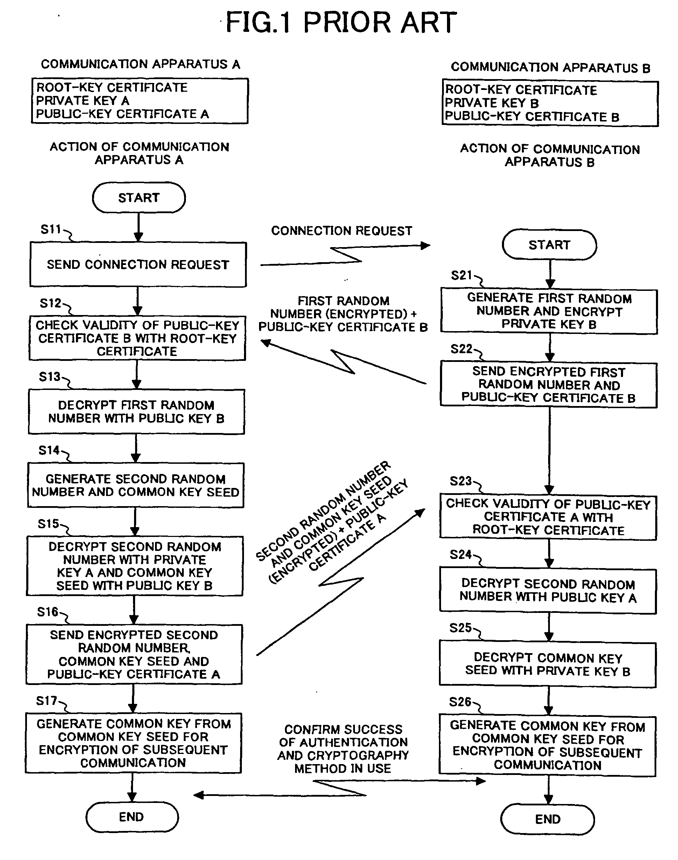

FIG. 1 is a flowchart of exemplary respective operations executed by communication apparatuses A and B for conventional cross-certification in compliance with SSL.

Referring to FIG. 1, in cross-certification in accordance with SSL, each of the communication apparatuses A and B must be provided in advance with a root-key certificate, a private key and a public-key certificate. The private key is issued to each communication apparatus by a certificate authority (CA). The public-key certificate is a digital certificate created by CA in such a way that a digital signature is attached to a public key corresponding to the private key. The root-key certificate is a digital certificate created by CA in such a way that a digital signature is attached to a root key corresponding to a root private key to generate the digital signature of the public-key certificate.

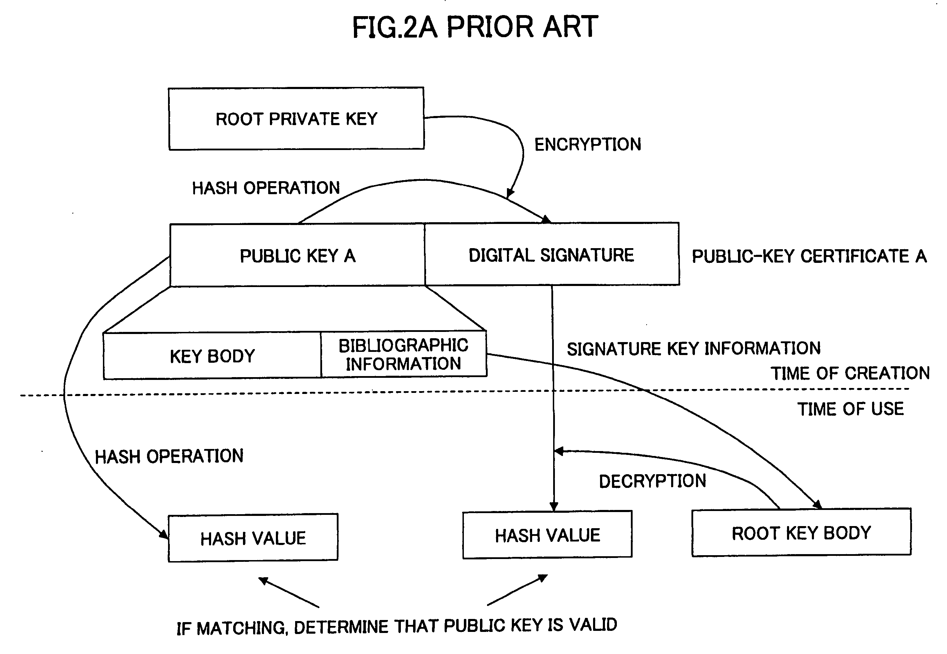

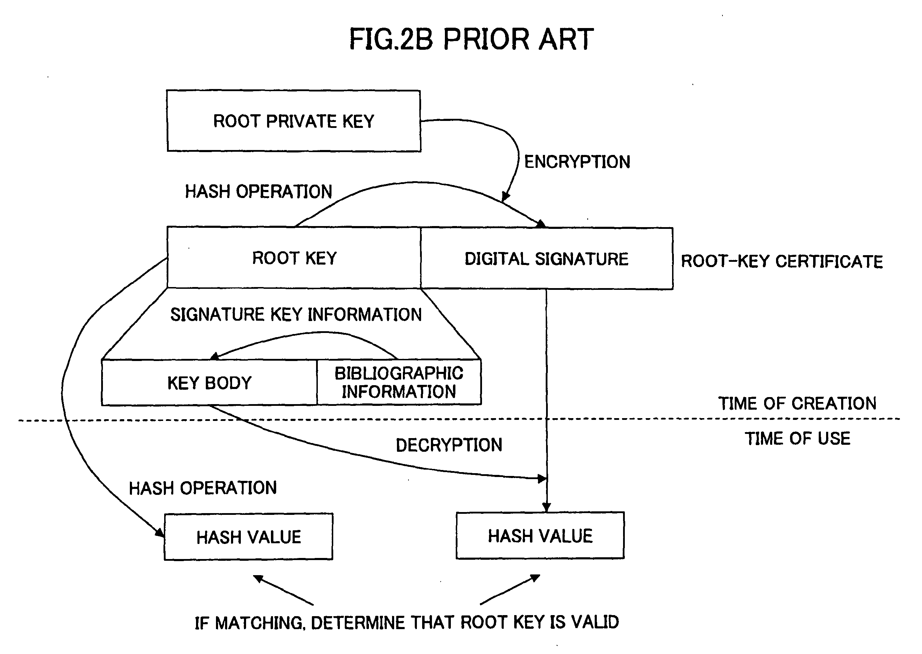

FIGS. 2A and 2B show exemplary relations among these elements.

Referring to FIG. 2A, a public key A is composed of a key body to decrypt a document encrypted with a private key A and bibliographic information having some information items, for example, including CA issuing the public key A and a term of validity. In order to show that the key body and the bibliographic information are not tampered, CA uses a root private key to encrypt a hash value obtained by hashing the public key A, and attaches the hash value as a digital signature to the public key A. At this time, CA adds identification information of the root private key in use for the digital signature as signature key information to the bibliographic information of the public key A. This public-key certificate having the digital signature is the public-key certificate A.

When an authentication process is performed by using the public-key certificate A, the key body of the corresponding root public key are used to decrypt the attached digital signature. If the decryption is successfully completed, it can be concluded that CA attached the digital signature. In addition, if the hash value obtained by hashing the public key A matches a hash value obtained by decrypting the digital signature, it can be determined that the key itself has not been also damaged and tampered. Furthermore, if the received data can be successfully decrypted with the public key A, it can be concluded that the data was sent from an owner of the private key A.

Here, in order to conduct such authentication, the root key must be stored in advance. As shown in FIG. 2B, this root key is stored as a root-key certificate to which CA attaches a digital signature. The root-key certificate is created in a self-signing form in which the digital signature can be decrypted with a root public key included therein. In order to use the root public key, the key body of the root-key certificate is used to decrypt the digital signature, and a hash value obtained by the decryption is compared to a hash value obtained by hashing the root public key. If these values are the same, it can be determined that the root public key has not been damaged and tampered.

The flowchart of FIG. 1 is described in detail. In FIG. 1, illustrated arrows between two respective process streams executed by the two communication apparatuses A and B represent data transfer. In the flowchart, each arrow means that a transmitter transmits information at a process step shown in the arrow source of the arrow. Also, it is supposed that in response to receipt of the transmitted information, the corresponding receiver performs a process step shown in the arrow head of the arrow. In addition, if a step is not successfully completed, a response to report authentication failure is returned at this time, and then the process is halted. If such authentication failure response is received from the other communicating party or the process is timed out, the process is halted.

In the illustration, the communication apparatus A requests to establish communication to the communication apparatus B. In this case, in response to execution of a predetermined control program by CPU (Central Processing Unit) of the communication apparatus A, the process stream shown in the left-hand side of FIG. 1 is initiated. At step S11, the communication apparatus A sends a connection request to the communication apparatus B.

In response to receipt of the connection request, CPU of the communication apparatus B executes a predetermined control program, and then the process stream shown in the right-hand side of FIG. 1 is initiated. At step S21, the communication apparatus B generates a first random number, and then uses a private key B to encrypt the first random number. At step S22, the communication apparatus B sends the encrypted first random number and a public-key certificate B to the communication apparatus A.

At the side of the communication apparatus A, when receiving the encrypted first random number and the public-key certificate B, the communication apparatus A checks whether the public-key certificate B is valid by using a root key certificate possessed by the communication apparatus A at step S12.

If the public-key certificate B is determined to be valid, the communication apparatus A uses a public key in the received public-key certificate B to decrypt the first random number at step S13. If the decryption is successfully completed, the communication apparatus A can make sure that the first random number was sent from the party to which the public-key certificate B was issued. At step S14, the communication apparatus A generates a second random number and a seed of a common key. This common key seed can be generated, for example, based on data exchanged in communication so far. At step S15, the communication apparatus A uses the private key A to encrypt the second random number, and uses the public key B to encrypt the common key seed. At step S16, the communication apparatus A sends these encrypted data together with the public-key certificate A to the communication apparatus B. The encryption of the common key seed is intended to make the common key seed secret to any apparatus other than the communication apparatus B. Then, at step S17, the communication apparatus A generates the common key to encrypt subsequent communication from the common key seed generated at step S14.

At the side of the communication apparatus B, when receiving the data sent at step S16 by the communication apparatus A, the communication apparatus B checks whether the public-key certificate A is valid based on a root-key certificate possessed by the communication apparatus B at step S23. If the public-key certificate A is determined to be valid, the communication apparatus B uses the public key A in the received public-key certificate A to decrypt the second random number. If the decryption is successfully completed, the communication apparatus B can make sure that the second random number was sent from the party to which the public-key certificate A was issued.

At step S25, the communication apparatus B uses the private key B to decrypt the common key seed. Through the communication so far, the common key seed can be shared by the communication apparatuses A and B. Also, this common key seed cannot be known to any apparatus other than the communication apparatus A generating the common key seed and the communication apparatus B possessing the private key B. If the process so far is successfully completed, the communication apparatus B can generate the common key for encryption of subsequent communication from the decrypted common key seed at step S26.

Then, after completion of steps S17 and S26 of the communication apparatuses A and B, respectively, the communication apparatuses A and B can confirm the success of cross-certification and identify the cryptographic scheme in use for subsequent communication. Then, the communication apparatuses A and B accept that the subsequent communication should follow the cryptographic scheme employing the generated common key, and the certification process is terminated. It is noted that the confirmation includes a response indicating that the authentication from the communication apparatus B has been successfully completed. In this manner, the communication between the communication apparatuses A and B is established each other, and the communication apparatuses A and B can subsequently communicate each other by encrypting data in the determined common key cryptographic scheme with the common key generated at step S17 or S26.

Through execution of the above authentication process, it is possible to safely share a common key between the communication apparatuses A and B and establish a secure communication path.

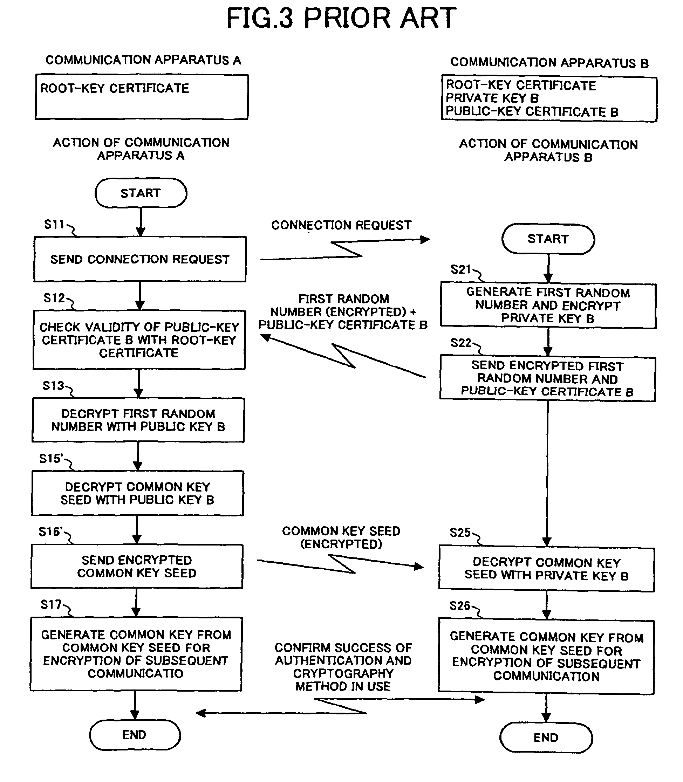

In the above process, the communication apparatus does not necessarily encrypt the second random number with the public key A and then send it together with the public-key certificate A to the communication apparatus B. In this case, steps S23 and S24 of the communication apparatus B may become unnecessary, and another exemplary authentication process corresponding to the case may be illustrated in FIG. 3. In the illustrated process, the communication apparatus B cannot authenticate the communication apparatus A. However, if the communication apparatus A only has to authenticate the communication apparatus B, the authentication process shown in FIG. 3 works satisfactorily. Also, in this case, only the root-key certificate has to be stored in the communication apparatus A. In other words, the private key A and the public-key certificate A may not be possessed by the communication apparatus A. On the other hand, the root-key certificate does not have to be possessed by the communication apparatus B.

Meanwhile, in the above-mentioned authentication process, there are two levels of authentication criteria. In the first level, it is determined whether a communicating apparatus satisfies certain criteria. For example, it is determined whether the apparatus is supplied from the same vendor or passes a certain test. In the second level, the communicating apparatus is identified.

In the first level authentication, a pair of a public-key certificate and a private key, which are possessed in common by each apparatus satisfying certain criteria, is stored in the apparatus. Then, this pair may be used for authentication in SSL communication and to show that the communicating party is an apparatus to which the public-key certificate was issued. Thus, it is unnecessary to exchange identification (ID) information assigned to each apparatus between communicating parties in accordance with the first level authentication.

On the other hand, in the second level authentication, for example, the same keys as the first level authentication are used to establish a secure communication path, and then IDs to identify the communicating parties may be exchanged to perform authentication.

Here, in case of authenticating an apparatus itself, it is necessary to identify the apparatus over communication. In addition, it is necessary to design a scheme to guarantee that the apparatus identified over communication is a communicating apparatus of interest. From these reasons, the second level authentication is required.

However, in accordance with such an identifying scheme, an application has to be used to manage apparatus IDs separately from SSL authentication by sending ID after establishment of a secure communication path as described above.

In addition, if the common public-key certificate and private key were leaked to a third party, the third party could conduct spoofing on any apparatuses having known IDs, and thereby communication security can be significantly damaged. In this case, unless keys of all apparatuses are updated, it is impossible to recover the damaged communication security, and this recovery requires a considerable amount of workload.

In order to overcome the above-mentioned problem, a public-key certificate and a private key are issued to each apparatus, and identification information of each apparatus is described within bibliographic information of the public-key certificate. Then, in order to determine the validity of the public-key certificate, it is checked whether a party sending the public-key certificate, that is, an apparatus to which the public-key certificate was issued, is a qualified communicating party with reference to the identification information in the bibliographic information. In this scheme, even if a key of one apparatus is leaked to a third party, the third party can spoof only the leaked apparatus because of differences of respective pairs of public-key certificates and private keys among individual apparatuses. In addition, secure communication can be maintained simply by replacing the leaked key of the apparatus.

Meanwhile, in authentication of an apparatus itself, a digital certificate has to be stored in advance into the apparatus unlike authentication of identifying a user of a Web browser. In fact, such a digital certificate has to be stored in the apparatus at fabrication time thereof. Also, for example, if a component having a memory for storing the digital certificate is replaced due to damage and malfunction thereof, the certificate has to be stored in a newly installed memory after the replacement.

However, in the above case where the certificate having apparatus identification information is used, since different certificates have to be stored in separate apparatuses, it is difficult to produce a large number of components and apparatuses having different certificates by simply copying the same data to respective memories.

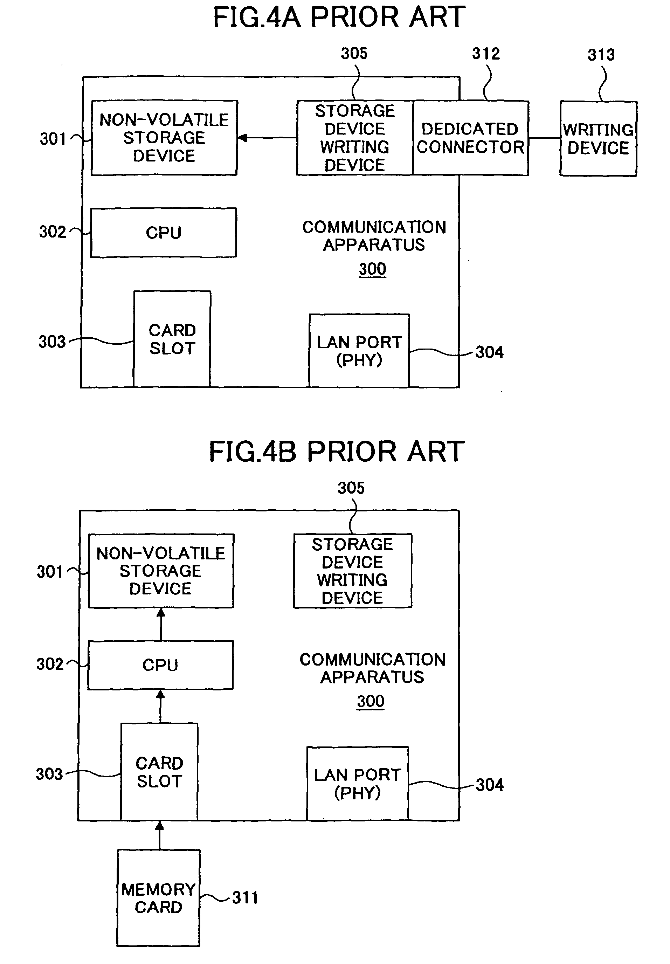

Conventional methods of writing different information items in respective non-volatile memories are described with reference to FIGS. 4A and 4B.

Referring to FIG. 4A, in one conventional method, a memory device writing terminal 305 is provided on a substrate pattern connected to a non-volatile memory device 301 of a communication apparatus 300, and then a write-dedicated connector 312 is connected to the communication apparatus 300. In such a structure, information is written from a writing device 313.

In this conventional method, however, such a write-dedicated device is required. Thus, from the viewpoint of management of the dedicated device, it is difficult for OEM (Original Equipment Manufacturer) manufacturers to write information. Also, if a component storing a certificate of an apparatus is damaged after distribution of the apparatus to market, it is difficult to enable necessary information to be rewritten.

In addition, in an apparatus fabrication step, it may be desired that identification information is assigned to each apparatus at the final stage of the fabrication step. If the identification information is assigned to each apparatus prior to the final stage, some problems may occur. For example, at a subsequent step, if an apparatus, to which identification information has been assigned, is discarded based on a detected malfunction, there is a risk that the identification information assigned to the discarded apparatus may become unavailable. In order to prevent such a situation, it may be desired that a certificate having the identification information is stored at the final stage of the fabrication step.

However, since a connection I/F (storage device writing terminal 305), which is a dedicated device not used in normal operation, is mounted within the apparatus at the current stage, it requires trouble some tasks, such as temporary detaching of a substrate of the apparatus, to connect the dedicated connector 312 to the connection I/F 305, resulting in worse work efficiency. Also, there is a risk that these tasks happen to damage the apparatus. Of course, although such a dedicated connection I/F may be disposed in the exterior of the apparatus, the additional installation of the connection I/F in no use for normal operation increases fabrication cost of the apparatus.

Referring to FIG. 4B, in the other method, a memory card 311, such as PCMCIA (Personal Computer Memory Card International Association) card, is used as a replaceable storage device to write information therein. Specifically, the communication apparatus 300 is provided with a card slot 303 as an interface (I/F) to connect such a storage device thereto. CPU 302 reads contents in the memory card 311 connected to the card slot 303 and then writes the contents in, the nonvolatile storage device 301.

According to this method, if the prepared memory card 311 stores an appropriate certificate, it is possible to write information anywhere, including OEM manufacturers and distributors.

However, since memory cards are widespread generic media, it is difficult to manage security, such as checking of validity of the memory card 311 and prevention of possession of the memory card 311 by an unfavorable third party. In addition, it is difficult to prevent a third party from fraudulently obtaining data from the memory card 311..

Furthermore, in order to prevent spoofing of an apparatus, it is necessary to prevent malicious users from exchanging, reading and registering digital certificates. Also, since ordinary users must be prohibited from updating digital certificates, it is difficult to check authority to set certificates employing the memory card 311.

US2002/0152382A discloses a method of setting a digital certificate available to authentication in a communication apparatus by using a certificate setting apparatus, characterized by steps of:
mounting a component having a common certificate to the communication apparatus; and
performing authentication between the certificate setting apparatus and the, communication apparatus by using the common certificate, and when the authentication succeeds, using the certificate setting apparatus to cause the communication apparatus to store an individual certificate therein,
wherein the common certificate is a digital certificate without identification information of the communication apparatus, and the individual certificate is a digital certificate with identification information of the communication apparatus.

The present invention is the method defined in claim 1.

ln an embodiment of the above invention, the method may further include a step of: examining quality of the communication apparatus after the mounting step, wherein when the communication apparatus successfully passes the examination, the authentication step may be performed on the communication apparatus.

In an embodiment of the above invention, the method may further include a step of: assigning identification information to the successfully passing communication apparatus before the authentication step, wherein the individual certificate may include the identification information assigned to the communication apparatus.

In an embodiment of the above invention, the identification information may include at least one of a production number and a serial number.

In an embodiment of the above invention, the individual certificate may be stored via an interface exposed to an exterior of a body of the communication apparatus.

In an embodiment of the above invention, the interface may include a connector to connect an Ethernet based communication cable.

In an embodiment of the above invention, the authentication may follow at least one of SSL protocol and TLS protocol.

According to one aspect of the present invention, it is possible to set a digital certificate, to which identification information of a communication apparatus is attached, to the communication apparatus easily and securely.

Other objects, features and advantages of the present invention will become more apparent from the following detailed description when read in conjunction with the accompanying drawings.

### BRIEF DESCRIPTION OF THE DRAWINGS

FIG. 1 is a flowchart of exemplary respective operations executed by communication apparatuses A and B for conventional cross-certification in compliance with SSL;
FIGS. 2A and 2B show exemplary relations among a root key, a root private key and a public-key certificate in the cross-certification shown in FIG. 1;
FIG. 3 is a flowchart of exemplary respective operations executed by communication apparatuses A and B for conventional one-directional authentication;
FIGS. 4A and 4B are diagrams to explain conventional methods of writing individual information in a non-volatile storage device;
FIG. 5 is a block diagram illustrating an exemplary structure of such a communication system according to an embodiment of the present invention;
FIG. 6 is a block diagram illustrating an exemplary hardware configuration of an upper-level apparatus and a lower-level apparatus according to an embodiment of the present invention;
FIG. 7 is a block diagram illustrating an exemplary functional structure related to certificate setting of the upper-level apparatus and the lower-level apparatus according to an embodiment of the present invention;
FIG. 8 shows an exemplary table indicating determination criteria on execution permission and denial of actions of a request management part;
FIG. 9 schematically shows an exemplary communication scheme between the upper-level apparatus and the lower-level apparatus;
FIG. 10A schematically shows exemplary types of certificates and keys stored as authentication information in the lower-level apparatus;
FIG. 10B schematically shows exemplary types of certificates and keys stored as authentication information in the upper-level apparatus;
FIG. 11 shows exemplary information contents of an individual public-key certificate for a lower-level apparatus according to an embodiment of the present invention;
FIG. 12 is a diagram to explain an exemplary operation to selectively use an individual public-key certificate and a common public-key certificate in a communication system according to an embodiment of the present invention;
FIG. 13 schematically shows an exemplary process flow of a manufacturing step according to an embodiment of the present invention;
FIG. 14 is a diagram to explain exemplary steps of storing each certificate set in a component A according to a certificate setting method of the present invention;
FIG. 15 is a flowchart of an exemplary procedure executed by the lower-level apparatus in writing of an individual certificate set according to an embodiment of the present invention;
FIG. 16 is a block diagram illustrating an exemplary structure of components related to setting of an individual certificate set;
FIG. 17 schematically shows an exemplary circumference of a communication terminal and a certificate writing apparatus in a manufacturing factory according to an embodiment of the present invention;
FIG. 18 shows an exemplary rating plate attached to a communication apparatus according to an embodiment of the present invention; and
FIG. 19 shows an exemplary system structure of a communication system having a plurality of lower-level apparatuses according to an embodiment of the present invention.

### DETAILED DESCRIPTION OF THE PREFERRED EMBODIMENTS

In the following, embodiments of the present invention will be described with reference to the accompanying drawings.

An exemplary system structure of a communication system according to an embodiment of the present invention is described. The communication system includes a lower-level apparatus as a communication apparatus to which a certificate setting method according to the present invention is applied, and an upper-level apparatus as a communication apparatus communicating to the lower-level apparatus.

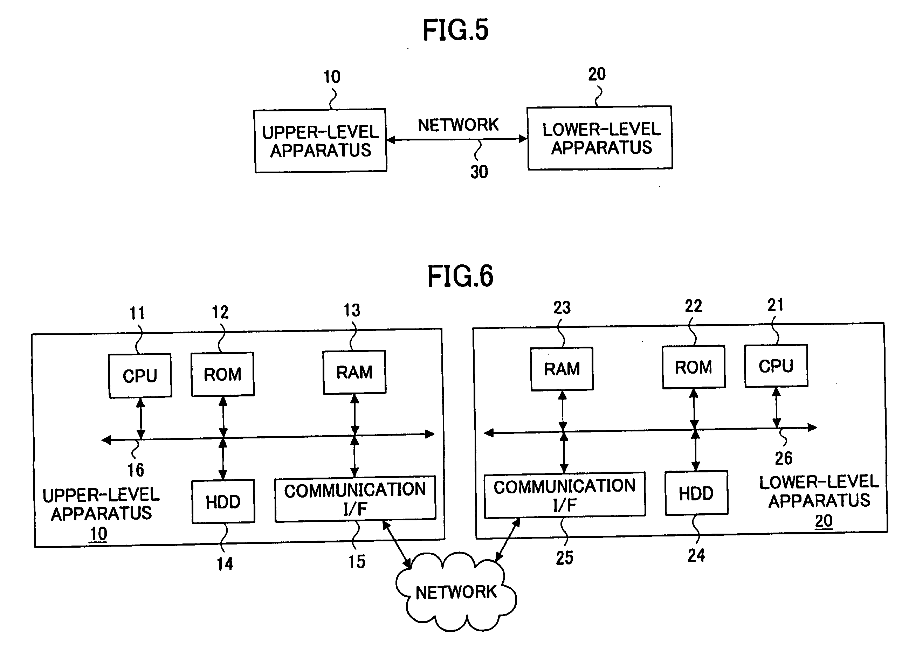

FIG. 5 is a block diagram illustrating an exemplary system structure of such a communication system according to an embodiment of the present invention.

Referring to FIG. 5, the communication system includes an upper-level apparatus 10, a lower-level apparatus 20 and a network 30. In the communication system, the upper-level apparatus 10 and the lower-level apparatus 20 have respective communication functions, and are connected to each other via the network 30.

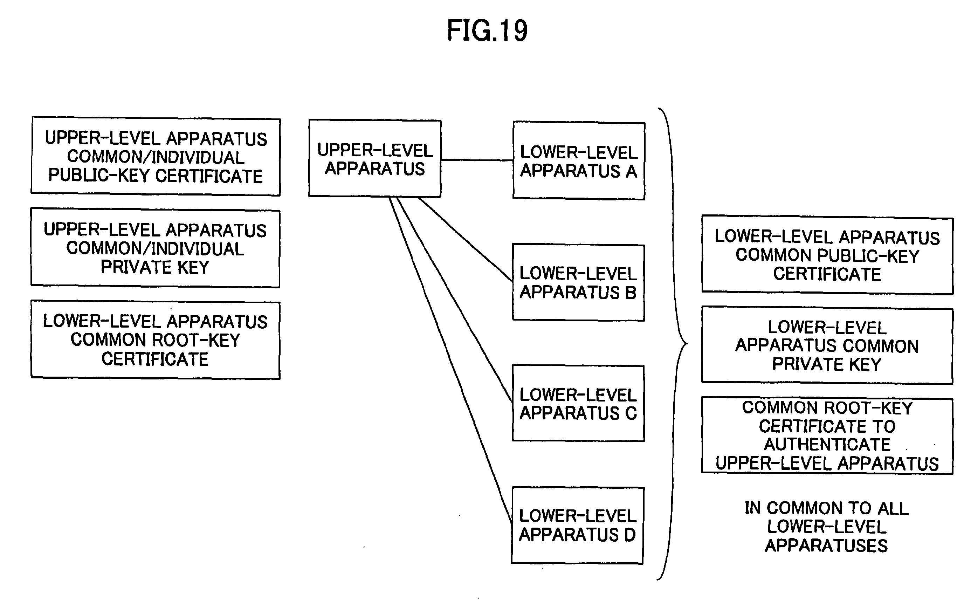

The network 30 may be wired and wireless network, and include various types of communication lines (communication paths) from which the network 30 can be constructed. Also, although only one lower-level apparatus 20 is illustrated herein, a communication system according to another embodiment may include a plurality of lower-level apparatuses 20 as illustrated FIG. 19.

An exemplary hardware configuration of the upper-level apparatus 10 and the lower-level apparatus 20 according to an embodiment of the present invention. is described.

FIG. 6 is a block diagram illustrating an exemplary hardware configuration of the upper-level apparatus 10 and the lower-level apparatus 20 according to an embodiment of the present invention.

Referring to FIG. 6, the upper apparatus 10 includes CPU 11, ROM 12, RAM 13, HDD 14, a communication interface (I/F) 15 and a system bus 16, and these components are connected via the system bus 16. In order to implement some functions, such as authentication of a communicating party and renewal of a digital certificate of the lower-level apparatus 20, CPU 11 controls operation of the upper-level apparatus 10 by executing various control programs in ROM 12 and HDD 14. Throughout this specification, it is noted that a digital certificate represents digital data to which a signature to prevent falsification is attached.

Like the upper-level apparatus 10, the lower-level apparatus 20 includes CPU 21, ROM 22, RAM 23, HDD 24, a communication interface (I/F) 25 and a system bus 26, and these components are connected via the system bus 26. In order to implement some functions, such as a communication function and a function of setting individual certificates, CPU 21 controls operation of the lower-level apparatus 10 by executing various control programs in ROM 22 and HDD 24 as needed. Also, the communication I/F 25 may be provided with an interface having a connector to connect to Ethernet-based communication cable, for example, so that the lower-level apparatus 20 can be connected to a local area network (LAN).

It is noted that the upper-level apparatus 10 and the lower-level apparatus 20 may have various structures depending on embodiments, such as remote management and electric-commerce. Also, the upper-level apparatus 10 and the lower-level apparatus 20 may be implemented as suitable known computers. If necessary, additional hardware elements may be included in the upper-level apparatus 10 and/or the lower-level apparatus 20. Furthermore, the upper-level apparatus 10 and the lower-level apparatus 20 do not have to be configured to have the same structure.

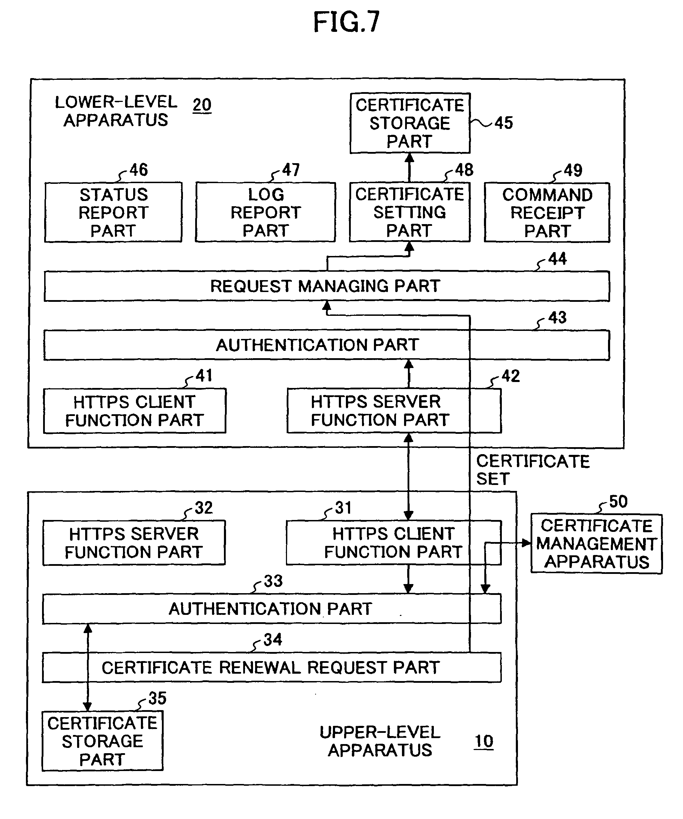

FIG. 7 is a block diagram illustrating an exemplary functional structure of functions related to a certificate setting operation of the upper-level apparatus 10 and the lower-level apparatus 20 according to an embodiment of the present invention. In the upper-level apparatus 10, CPU 11 implements the illustrated functions of the upper-level apparatus 10 by executing one or more predetermined control programs in ROM 12 and HDD 14. In the lower-level apparatus 20, CPU 21 implements the illustrated functions of the lower-level apparatus 20 by executing one or more predetermined control programs in ROM 22 and HDD 24.

Referring to FIG. 7, the upper-level apparatus 10 includes a HTTPS (Hypertext Transfer Protocol Security) client function part 31, a HTTPS server function part 32, an authentication part 33, a certificate renewal request part 34 and a certificate storage part 35.

The HTTPS client function part 31 uses HTTPS protocol, including authentication and cryptography processing in accordance with SSL, to request to establish communication to an apparatus having a HTTPS server function, such as the lower-level apparatus 20. The HTTPS client function part 31 has some functions to send commands or data to a communicating party so as to request the communicating party to perform some operations corresponding to the commands.

On the other hand, the HTTPS server function part 32, in response to receipt of a communication request in accordance with HTTPS protocol from an apparatus having a HTTPS client function, instructs components thereof to perform operations corresponding to commands or data received from the apparatus, and replies the result as a response to the requesting apparatus.

The authentication part 33, when the HTTPS client function part 31 and the HTTPS server function part 32 authenticate communicating parties, uses digital certificates received from the communicating parties together with certificates and private keys stored in the certificate storage part 35 to perform the authentication. On the other hand, in order to request authentication to communicating parties, the authentication part 33 can send digital certificates in the certificate storage part 35 to the communicating parties via the HTTPS client function part 31 and the HTTPS server function part 32.

The certificate renewal request part 34 works as an individual certificate setting part of sending individual certificates to communicating parties, such as the lower-level apparatus 20, and requesting the communicating parties to store the individual certificates therein, if a predefined case as described below holds. Here, these certificates are issued by transmitting necessary information to a certificate management apparatus (CA) 50 in the exterior of the communication system.

The certificate storage part 35 stores authentication information, such as various certificates and private keys, for the authentication performed by the authentication part 33. Types of these certificates and private keys as well as how to apply and generate them are described in detail below.

On the other hand, the lower-level apparatus 20 includes a HTTPS client function part 41, a HTTPS server function part 42, an authentication part 43, a request managing part 44, a certificate storage part 45, a status report part 46, a log report part 47, a certificate setting part 48 and a command receipt part 49.

Like the HTTPS client function part 31 of the upper-level apparatus 10, the HTTPS client function part 41 uses HTTPS protocol to request to establish communication to an apparatus having a HTTPS server function, such as the upper-level apparatus 10, and instructs the apparatus to perform some operations corresponding to commands received from the lower-level apparatus 20.

Like the HTTPS server function part 32 of the upper-level apparatus 10, the HTTPS server function part 42, in response to receipt of a communication request in accordance with HTTPS protocol from an apparatus having a HTTPS client function, instructs components thereof to perform operations corresponding to commands or data received from the apparatus, and replies the result as a response to the requesting apparatus.

Nearly like the authentication part 33 of the upper-level apparatus 10, the authentication part 43 uses certificates stored in the certificate storage part 45 to perform authentication.

The request managing part 44 can determine whether actions corresponding to commands received from the upper-level apparatus 10 are executable. In addition, if the actions are allowed to be executed, the request managing part 44 can informs the corresponding parts 46 through 49 to perform some operations corresponding to the allowed actions.

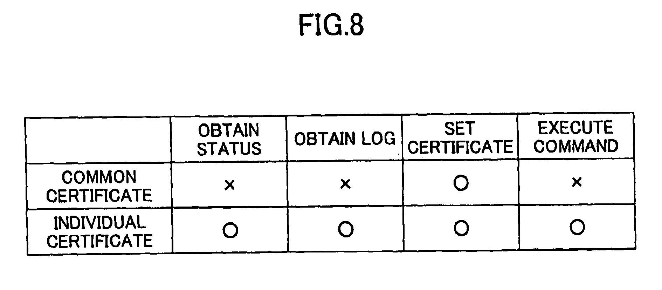

FIG. 8 shows an exemplary table indicating what actions of the request managing part 44 should be permitted or denied.

Referring to FIG. 8, the determination criteria are defined in association with request types, which are arranged in the horizontal direction, and digital certificate types, which are arranged in the vertical direction, in use of the authentication part 43. Digital certificates available to the upper-level apparatus 10 and the lower-level apparatus 20 according to this embodiment include individual public-key certificates and common public-key certificates. Although described in detail below, roughly speaking, an individual public-key certificate is a public-key certificate to which identification information of an apparatus is attached. A common public-key certificate is a public-key certificate to which no identification information of an apparatus is not attached. As shown in FIG. 7, if individual certificates are used for authentication, the request managing part 44 permits all actions based on the relational table. On the other hand, if common certificates are used for authentication, the request managing part 44 permits only an action to set certificates. Thus, the common certificates can be used only to store new individual certificates in the lower-level apparatus 20.

Like the certificate storage part 35 of the upper-level apparatus 10, the certificate storage part 45 stores authentication information such as certificates and private keys, and has a certificate storage function on behalf of authentication performed by the authentication part 33. It is noted that the stored certificates differ from those of an authentication management part 50 described below.

The status report part 46, in response to detection of an error or receipt of a user's instruction, reports the status of the lower-level apparatus 20 to the upper-level apparatus 10. This report may be sent as a response to an inquiry from the upper-level apparatus 10. Alternatively, in response to a communication request from the HTTPS client function part 41, the report may be sent to the upper-level apparatus 10.

The log report part 47 can report logs from the lower-level apparatus 20 to the upper-level apparatus 10. The reported logs may relate to actions performed by the lower-level apparatus 20. In addition, for example, if the apparatus is an image forming apparatus, the logs may relate to counter values of the number of image formed sheets. Also, if the apparatus is for a measurement system, the logs may relate to actually measured values. Since the log report is usually not urgent, the logs may be sent as a response to an inquiry from the upper-level apparatus 10.

The certificate setting part 48 uses individual public-key certificates received from the upper-level apparatus 10 to set and update certificates and others in the certificate storage part 45, as described below.

The command receipt part 49 performs actions corresponding to requests for functions other than the above-mentioned components 46 through 48. For example, these actions may include transmission of data in the lower-level apparatus 20 and operation control of an engine part as needed. It is noted that the status report part 46 and the log report part 47 are adopted as exemplary functions provided by the command receipt part 49. In other words, these functional entities are optional according to the present invention.

A communication scheme between the upper-level apparatus 10 and the lower-level apparatus 20 in the communication system according to an embodiment of the present invention is described.

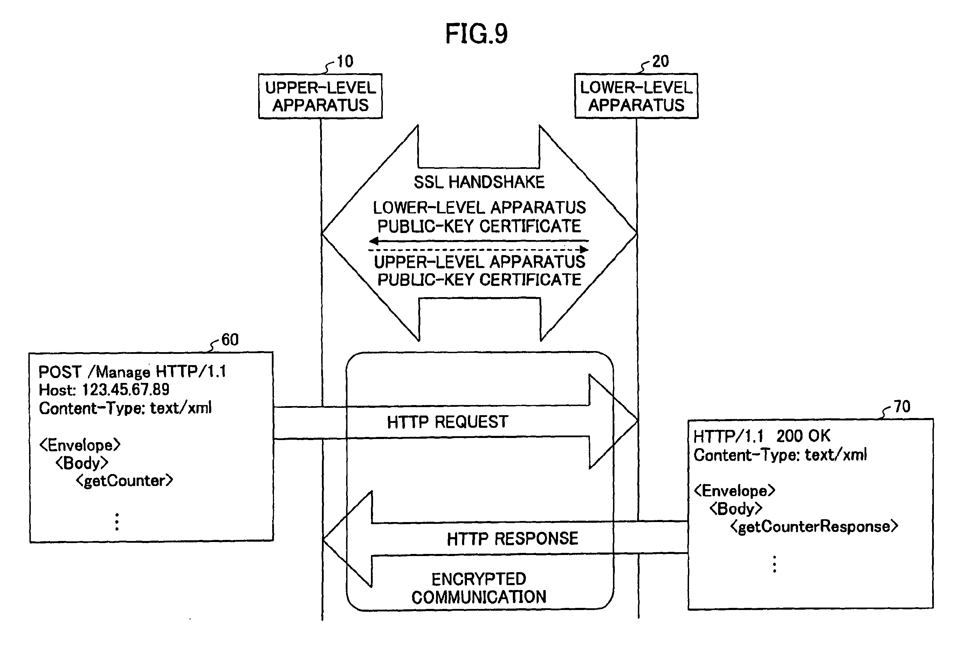

FIG. 9 shows an outline of an exemplary communication scheme between the upper-level apparatus 10 and the lower-level apparatus 20.

Referring to FIG. 9, in the communication system, when the upper-level apparatus 10 attempts to communicate to the lower-level apparatus 20, the upper-level apparatus 10 first requests the lower-level apparatus 20 to establish communication to the upper-level apparatus 10. Then, if the upper-level apparatus 10 authenticates the lower-level apparatus 20 as an authorized communicating party based on a result of the authentication process in compliance with SSL protocol, as described previously with respect to FIG. 1 and FIG. 3, the communication is established between the upper-level apparatus 10 and the lower-level apparatus 20. This authentication process is conventionally referred to as "SSL handshake". It is noted that cross-certification is not necessarily performed. One-directional authentication, as illustrated in FIG. 3, may be performed.

In this authentication process, the lower-level apparatus 20 is authenticated by sending a public-key certificate thereof to the upper-level apparatus 10. In addition, if the cross-certification is performed, in turn, the upper-level apparatus 10 is also authenticated by sending a public-key certificate thereof to the lower-level apparatus 20. However, in one-directional authentication, the upper-level apparatus 10 may not be authenticated.

If the above two-directional or one-directional authentication is successfully completed, the upper-level apparatus 10 generates a process request for a method of an application program installed to the lower-level apparatus 20 as a SOAP (Simple Object Access Protocol) message 60 described in XML form, which is a structured language form, and sends the SOAP message 60 as a HTTP request to the lower-level apparatus 20 in accordance with HTTP (Hyper Text Transfer Protocol). Such a request is called RPC (Remote Procedure Call).

Then, the lower-level apparatus 20 performs a process corresponding to the request. The lower-level apparatus 20 generates the process result as a response SOAP message 70, and sends the SOAP message 70 as a HTTP response to the upper-level apparatus 10. In order to secure communication, these request and response are encrypted with a common key exchanged between the communication apparatuses 10 and 20 in the previous SSL handshake process, and then the encrypted request and response are communicated between the communication apparatuses 10 and 20.

If these request and response are used between the communication apparatuses 10 and 20, the communication system can be considered as a client-server system having the upper-level apparatus 10 as a client and the lower-level apparatus 20 as a server. In contrast, if the lower-level apparatus 20 requests the upper-level apparatus 10 to establish communication between the two apparatuses 10 and 20, the communication system can be considered as another client-server system having the lower-level apparatus 20 as a client and the upper-level apparatus 10 as a server.

Also, RPC can be implemented through the above-mentioned technique as well as existing protocols, techniques and specifications such as FTP (File Transfer Protocol), COM (Component Object Model) and CORBA (Common Object Request Broker Architecture).

Exemplary features and applications of certificates and keys that the upper-level apparatus 10 and the lower-level apparatus 20 use as authentication information in the above-mentioned authentication process are described.

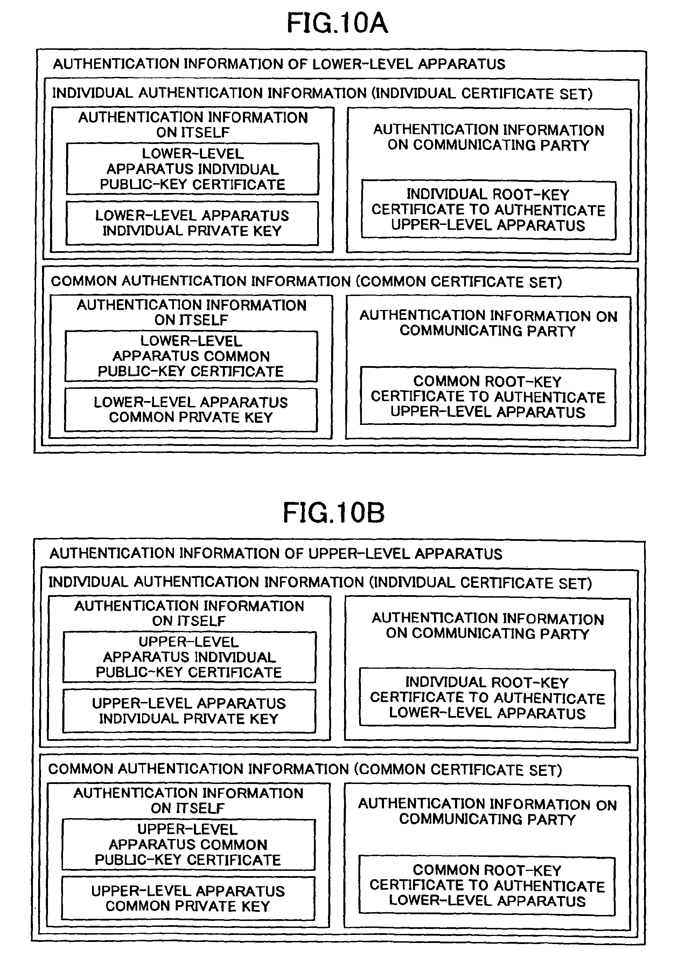

FIG. 10A schematically shows exemplary types of certificates and keys stored as authentication information in the lower-level apparatus 20. FIG. 10B schematically shows exemplary types of certificates and keys stored as authentication information in the upper-level apparatus 10.

Referring to FIGS. 10A and 10B, the upper-level apparatus 10 and the lower-level apparatus 20, if broadly classified, store individual authentication information and common authentication information. Further, each of these two information classes includes a public-key certificate and a private key used as authentication information on behalf of itself, and a root-key certificate used as authentication information on behalf of a communicating party.

Also, for example, a lower-level apparatus individual public-key certificate belongs to an individual digital certificate class, and is a digital certificate created by attaching a digital signature, which can verify validity of the certificate with the aid of an individual root key to authenticate the lower-level apparatus, to an individual public key issued to the lower-level apparatus 20 by CA (not illustrated).

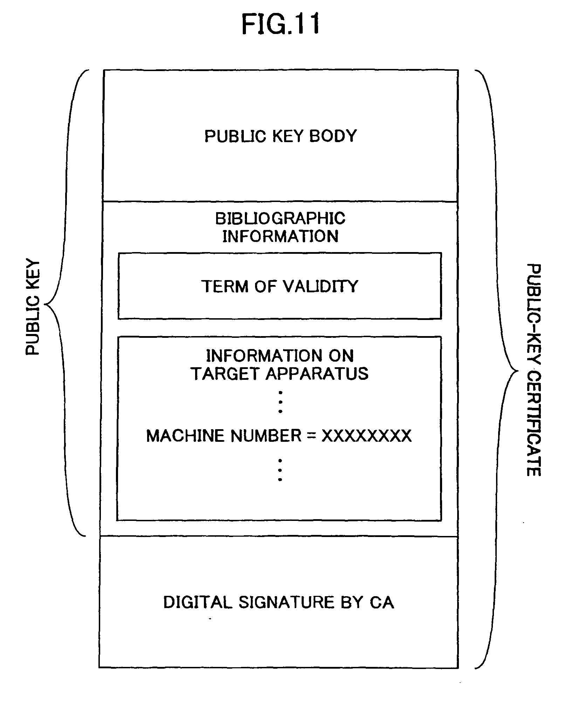

FIG. 11 shows an exemplary structure of a lower-level apparatus individual public-key certificate according to an embodiment of the present invention. In the illustrated individual public-key certificate, its bibliographic information includes machine number information of the lower-level apparatus 20 as identification information thereof. For example, this machine number information is comprised of the production number or serial number thereof. In addition, the machine number information may further include the type number of the lower-level apparatus 20 and information related to registered users.

Here, if an apparatus only has to be identified, the identification information attached to a public-key certificate does not necessarily include the machine number information. However, if the communication system is used to manage communication apparatuses, the identification information preferably includes the same information contents as the machine number information.

Specifically, in apparatus management, the machine number information is often used to identify the individual apparatuses. If the identification information does not include the machine number information, the upper-level apparatus 10 separately has to manage correspondence information, which mat be implemented as a correspondence table, between the identification information and the machine number information. In this case, whenever the lower-level apparatus 20 is newly manufactured, it is necessary to add such information to the manufactured lower-level apparatus 20. When several ten thousands, several hundred thousands, or more lower-level apparatuses 20 are manufactured, a large amount of data has to be managed, resulting in increasing workloads for the management.

However, if the identification information attached to the public-key certificate includes the same information contents as the above-mentioned machine number information, it is possible to directly identify the machine number of a communicating party from the identification information thereof. Thus, in this case, the correspondence information between the identification information attached to the public-key certificate and the machine number information becomes unnecessary, and thereby it is possible to reduce the workloads for that management.

Referring back to FIGS. 10A and 10B, a lower-level apparatus individual private key is a private key paired with the associated individual public key. An individual root-key certificate to authenticate an upper-level apparatus is a digital certificate created by attaching a digital signature, which can verify validity of the certificate by itself with the aid of the corresponding root private key, to an individual root key to authenticate the upper-level apparatus. If a plurality of lower-level apparatuses 20 are provided to the communication system as illustrated in FIG. 19, a digital signature generated by means of a uniform root private key is attached to respective individual public keys of the lower-level apparatuses 20, and a uniform individual root key certificate to verify validity thereof is used throughout the lower-level apparatuses 20. Even in this case, however, individual public keys in the individual public-key certificates and the corresponding private keys are made different among the individual lower-level apparatuses 20. Here, a collection of an individual public-key certificate, an individual private key and an individual root-key certificate is referred to as an individual certificate set.

Also, an upper-level apparatus individual public-key certificate, an upper-level apparatus individual private key and an upper-level apparatus individual root-key certificate have the same relation as those of the above-mentioned individual certificate set for the lower-level apparatus 20 in the communication system.

Here, for example, if the upper-level apparatus 10 and the lower-level apparatus 20 use individual authentication information to cross-authenticate each other, the lower-level apparatus 20, in response to receipt of a communication request from the upper-level apparatus 10, sends to the upper-level apparatus 10 a first random number encrypted with a lower-level apparatus individual private key together with a lower-level apparatus individual public-key certificate. The upper-level apparatus 10, first, uses an individual root-key certificate to authenticate a lower-level apparatus to check validity of the received lower-level apparatus individual public-key certificate, that is, to check whether the received certificate has been damaged or tampered. If it is determined that the received lower-level apparatus individual public-key certificate is valid, the upper-level apparatus 10 decrypts the received first random number with the public key included in the lower-level apparatus individual public-key certificate. If the decryption is successfully completed, the upper-level apparatus 10 can determine that the lower-level apparatus 20 to which the upper-level apparatus 10 is communicating is an authorized party to which the lower-level individual public-key certificate was issued, and additionally can identify the lower-level apparatus 20 based on identification information in the received lower-level apparatus individual public-key certificate. Then, the authentication is determined depending on qualification of the identified apparatus as a communicating party.

If the authentication is successfully completed by the upper-level apparatus 10, in turn, the lower-level apparatus 20 also receives an upper-level individual public-key certificate and a random number encrypted with an upper-level apparatus individual private key from the upper-level apparatus 10, and can perform the same authentication by using a root-key certificate to authenticate an upper-level apparatus stored therein.

In this embodiment, these public-key certificate and private key are stored in a rewritable non-volatile storage part, such as a flash memory, comprised of ROM 22 or RAM 23. Thus, when some parts, including the storage part, are replaced due to damage, the stored public-key certificate and private key are also removed together with the replaced parts. In this case, in order to enable authentication with an individual public-key certificate again, it is necessary to store the removed certificate and key again therein.

Here, if each apparatus were able to perform authentication with only an individual public-key certificate, there would be no secure transmission method of securely transmitting a new individual public-key certificate to the apparatus via the network 30. According to the present invention, however, each apparatus in the communication system is configured to store common authentication information as well as individual authentication information. As a result, it is possible to securely transmit a new individual public-key certificate to the apparatus that needs the certificate via the network 30 by using the stored common authentication information.

The common authentication information includes the almost same contents as those of the above-mentioned individual authentication information. For example, a lower-level common public-key certificate belongs to a common certificate class, and is a digital certificate created by attaching a digital signature, which can verify validity thereof with the aid of a lower-level apparatus common root key, to a common public key issued by CA to a lower-level apparatus. A lower-level apparatus common private key is a private key associated with the corresponding common public key, and a common root-key certificate to authenticate an upper-level apparatus is a digital certificate created by attaching a digital signature, which can verify validity thereof by itself, to a common root key to authenticate an upper-level apparatus. Then, a collection of a common public-key certificate, a common private key and a common root-key certificate is referred to as a common certificate set. Upper-level apparatus common authentication information has the same relation as the above-mentioned lower-level apparatus common authentication information in the communication system.

On the other hand, the common authentication information differs vastly from the individual authentication information in that bibliographic information of a common public-key certificate does not include identification information of an apparatus and additionally the same common public-key certificate can be stored in all apparatuses located at the same level. Here, it is supposed that the illustrated communication system in FIG. 5 and FIG. 19 includes two levels of an upper-level apparatus 10 and at least one lower-level apparatus 20. In this case, since apparatuses located at the same level do not have to be differentiated, the same common public key and the same common private key are available. Thus, since a uniform common public-key certificate can be used among communicating parties located at a certain level, these communicating parties can have the same root-key certificate each other. Accordingly, even if a plurality of lower-level apparatuses 20 are provided in the communication system, the same common authentication information can be stored in all the lower-level apparatuses 20.

That also holds for common authentication information of the upper-level apparatus 10.

In a case where the common authentication information and the individual authentication information are configured to have the same data format, in order to differentiate the common authentication information from the individual authentication information, for example, the machine number shown in FIG. 11 may be set as "0" to represent that a certificate is a common public-key certificate.

Since common authentication information can be made uniform to all apparatuses located at the same level, when a component having a storage area for storing a certificate is manufactured, it is possible to uniformly store common authentication information in components having certificate storage areas depending on the type of apparatuses to which the components are to be mounted. In the above case where such common authentication information is stored in a component in advance, even if individual authentication information is discarded from an apparatus due to replacement of the storage component thereof, executability of authentication can be maintained by using a common public-key certificate in the same common authentication information stored in a newly mounted component. Also, since a component is configured to have such common authentication information without individual authentication information, the apparatus needs no identification information at time of production thereof. Thus, it is possible to produce a number of components as a commonly available component without dependency on identification information of apparatuses. Accordingly, it is possible to have the components in stock for future replacement. Therefore, even if the component has to be replaced, the situation can be quickly dealt with.

In this embodiment, as described above, the identification information of an apparatus is not attached to a common public-key certificate. Thus, if such a common public-key certificate is used to authenticate a communicating party, it is impossible to completely identify the communicating party. Even in this case, however, some degree of information on the communicating party can be still obtained.

Specifically, for example, a certain vendor stores a lower-level apparatus common certificate set in all of its apparatuses corresponding to the lower-level apparatus 20 and an upper-level apparatus common certificate set in all of its apparatuses corresponding to the upper-level apparatus 10, which can communicate to the apparatuses corresponding to the lower-level apparatus 20. In this configuration, if authentication is successfully completed, the lower-level apparatus 20 can determine that a party sending a public-key certificate to check validity with a common root-key certificate to authenticate an upper-level apparatus of the common authentication information stored therein is an upper-level apparatus 10 of the same vendor. On the other hand, the upper-level apparatus 10 can also determine that a party sending a public-key certificate to check validity with a common root-key certificate to authenticate a lower-level apparatus of the common authentication information stored therein is a lower-level apparatus 20 of the same vendor.

As a result, even if the identification information cannot be referred to, determination can be made at some degree as to whether an apparatus that requested or is requesting communication is a qualified apparatus.

If the authentication is successfully completed, a secure communication path can be established by using a common key shared between communicating parties. Accordingly, if machine number information on the communicating parties is exchanged between them after establishment of the secure communication path, the communicating parties can be identified each other.

In this embodiment, the authentication information shown in FIGS. 10A and 10B may have the same individual root-key certificate regardless of an authenticated target. For example, the individual root-key certificate to authenticate an upper-level apparatus and the individual root-key certificate to authenticate a lower-level apparatus may be the same. This is why identification information of an apparatus is attached to an individual public-key certificate, and if the individual public-key certificate is determined to be valid by using a root-key certificate, it is possible to identify the type and level of the apparatus with reference to the identification information. On the other hand, since the identification information is not attached to common certificates, the type thereof is determined based on whether the validity can be checked with a certain root-key certificate. Thus, it is preferable to differentiate common root-key certificates for each group of authenticated targets.

Meanwhile, since the lower-level apparatus 20, which works as a server in this embodiment, cannot identify a party requesting communication at time of SSL handshaking, the lower-level apparatus 20 basically sends a uniform public-key certificate to all parties. However, in the present communication system, the lower-level apparatus 20 has to selectively use an individual public-key certificate and a common public key depending on situations.

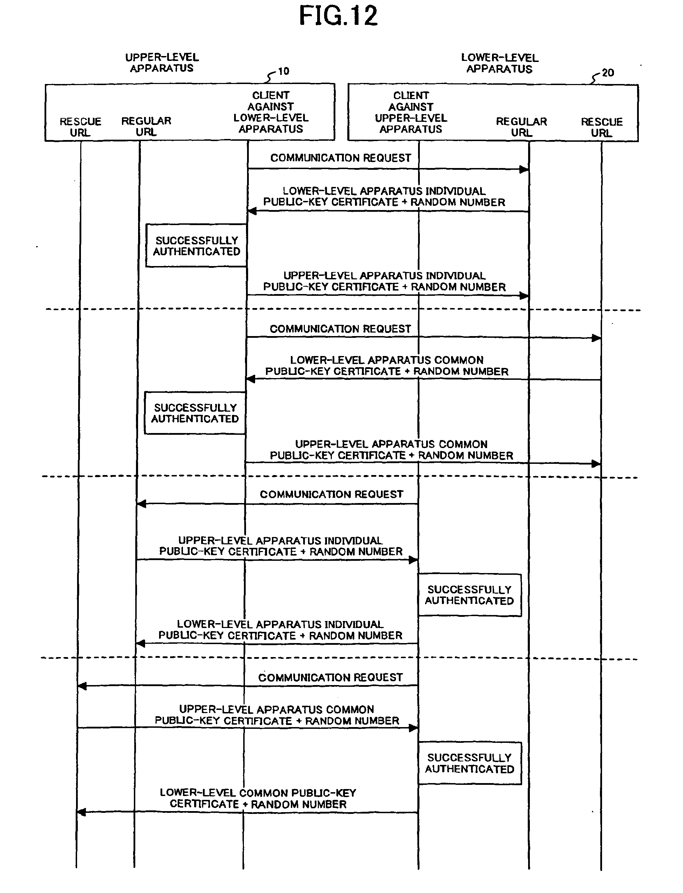

FIG. 12 is a diagram to explain an exemplary operation to selectively use an individual public-key certificate and a common public-key certificate in a communication system according to an embodiment of the present invention.

Referring to FIG. 12, a server cannot comprehend the status of a client at receipt time of a communication request from the client. Thus, when certain URL (Uniform Resource Locator) is accessed, the server always provides the same public-key certificate. Accordingly, the server cannot be basically configured to have different individual public-key certificates and selectively send a suitable one depending on the type of an individual root-key certificate of a communicating party. However, if communication requests can be accepted at different addresses, different public-key certificates can be returned to the individual addresses. These addresses can be defined, for example, through different URLs.

Thus, in the embodiment as illustrated in FIG. 12, each of the upper-level apparatus 10 and the lower-level apparatus 20 is configured to have not only a normal URL for authentication employing individual public-key certificates but also a rescue URL for authentication employing common public-key certificates. Also, in this embodiment, a communication requesting party, which works as a client, sends a communication request by selectively designating one of the above URLs depending on the type of requested authentication. Even if these URLs physically belongs to the same apparatus, the URLs can be logically dealt with as URLs of different apparatuses by altering at least one of the IP address and the port number thereof. In other words, the URLs are used to realize so-called "virtual-server function".

In such a case, a communication requested party, which works as a server, determines a certificate to be replied based on URL via which a communication request was accepted. If the communication request is accepted via the normal URL, the server provides an individual public-key certificate. On the other hand, if the communication request is accepted via the rescue URL, the server provides a common public-key certificate.

It is noted that the communication requesting client knows which URL the client has sent a communication request. Thus, when cross-certification is performed, the client can send an appropriate public-key certificate corresponding to the designated URL.

Accordingly, in this communication system, authentication is normally performed between the upper-level apparatus 10 and the lower-level apparatus 20 by using an individual public-key certificate. In addition, even if the individual public-key certificate is removed through replacement of parts, it is possible to establish a secure communication path by performing authentication with a common public-key certificate stored in a newly installed parts. This is why a common key is shared as in the individual public-key certificate even in authentication in use of the common public-key certificate. Then, this communication path is used to send individual authentication information to be set in the lower-level apparatus 20 from the upper-level apparatus 10, and the upper-level apparatus 10 and the lower-level apparatus 20 can be restored to realize a status enabling authentication with individual authentication information again.

Also, even in authentication with a common public-key certificate, the communicating party can be identified at some degree, as mentioned above. As a result, the communication system may be restricted, for example, to send individual certificates to only apparatuses manufactured by the same manufacturer, so as to prevent transmission of the individual certificates to unauthorized apparatuses.

In this manner, in the communication system, common authentication information is used together with individual authentication information, and even if a component for storing a certificate necessary for authentication is replaced, the communication system can be restored into a status where a normal authentication operation employing individual authentication information can be performed easily and quickly.

In cross-certification between the upper-level apparatus 10 and the lower-level apparatus 20, all authentication information items shown in FIGS. 10A and 10B must be stored. However, if one-directional authentication is performed, that is, if the lower-level apparatus 20 works as a server and the upper-level apparatus 10 authenticates the lower-level apparatus 20, some certificates do not have to be stored. In this case, with respect to each of individual authentication information and common authentication information, the lower-level apparatus 20 needs no root-key certificate to authenticate an upper-level apparatus, and the upper-level apparatus 10 needs neither upper-level apparatus public-key certificate nor upper-level apparatus private key.

Moreover, it is preferable to prepare a storage area for storing the above-mentioned individual certificate set and common certificate set in a component included in common in the lower-level apparatuses 20. In this embodiment, the lower-level apparatus 20 is configured to have such a structure. For example, such a common component may be a flash memory including ROM 22 and RAM 23, a memory card and a memory unit having NVRAM (Non-Volatile RAM) or the like, and a CPU board with a non-volatile memory. The upper-level apparatus 10 may also have the same structure as the lower-level apparatus 20.

An exemplary step of manufacturing a common component having such a certificate set storage area and the lower-level apparatus 20 having the common component is described. In this manufacturing step, an individual certificate set is set in the lower-level apparatus 20 according to a certificate setting method of the present invention.

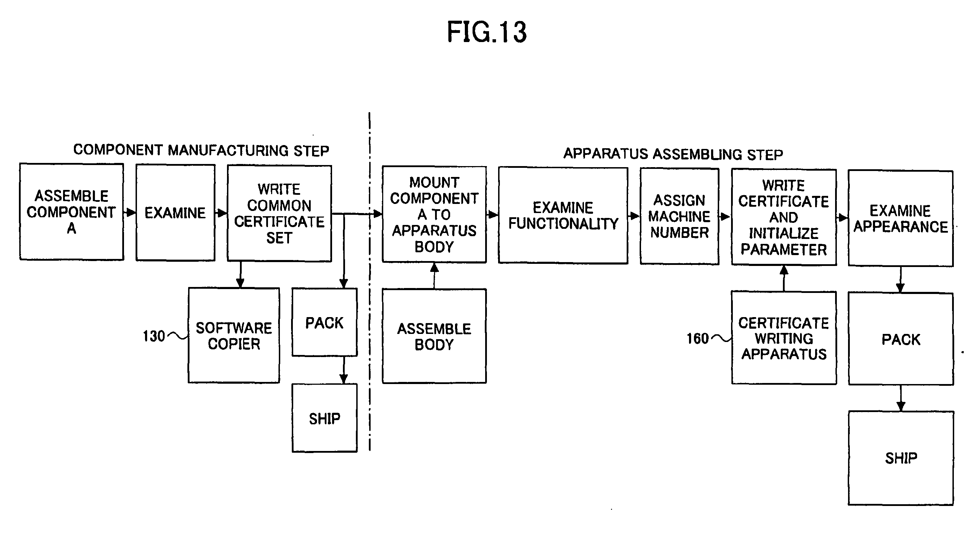

FIG. 13 roughly shows an exemplary process flow of the manufacturing step according to an embodiment of the present invention. In FIG. 13, a portion related to a process of setting a certificate set is focused, and the other portion thereof is omitted.

Referring to FIG. 13, in the step of manufacturing the lower-level apparatus 20, first, a component A having a certificate set storage area as described above is manufactured at a component manufacturing step. In this step, the component A is assembled and examined. In this examination, if the component A is a CPU board, it may be checked whether CPU is capable of accessing chips mounted on the CPU board.

After the examination, a software copying apparatus 130 is used in the factory to write one or more necessary control software items to control the lower-level apparatus 20 and a lower-level apparatus common certificate set in the component A. At this time point, no secure communication path can be established between the software copying apparatus 130 and the component A via a network. Also, since leaking of the common certificate set is more serious than leaking of the individual certificate set, it is preferable to use a write dedicated device to directly write the common certificate set in the component A.

In this manner, the component A can be produced. Then, if the component A is distributed, the component A is packed and shipped.

In this embodiment, the common certificate set is preferably stored in the software copying apparatus 130 in advance, because the common certificate set can be determined depending on the type and level of apparatuses to which the component A is installed. Also, if the component A is a standardized memory card, the component A may not be assembled.

On the other hand, if the component A is used to manufacture the lower-level apparatus 20 instead of shipment as an independent component, the common certificate set is written in the component A, and then the component A having the common certificate set is delivered to an apparatus assembly step, in which the component A is installed in the body part of the lower-level apparatus 20. This apparatus assembly step corresponds to a mounting step of the certificate setting method according to this embodiment. Then, after the lower-level apparatus 20 is assembled, it is checked whether the lower-level apparatus 20 is qualified with respect to functions and quality thereof. In this examination, it may be checked whether CPU on the CPU board can access devices located in the exterior of the CPU board, such as a communication I/F 25. This examination step corresponds to an examination step according to this embodiment.

Then, a machine number is assigned to a apparatus that has successfully passed the examination. After the assignment, an individual certificate set is created to include the machine number in an individual public-key certificate as identification information of the apparatus. The individual certificate set is stored in the lower-level apparatus 20 by a certificate writing apparatus 160, and machine number information and initial setup values of the apparatus are also stored at this step. This step corresponds to an authentication step according to this embodiment. After the storage of these information items, appearance of the lower-level apparatus 20 is examined, and then is packed for shipment.

Through the above steps, it is possible to manufacture the lower-level apparatus 20. Also, it is possible to produce the upper-level apparatus 10, although a different common certificate set is stored therein, in accordance with the similar steps. It is noted that the component manufacturing step and the apparatus assembly step may be often conducted in different factories.

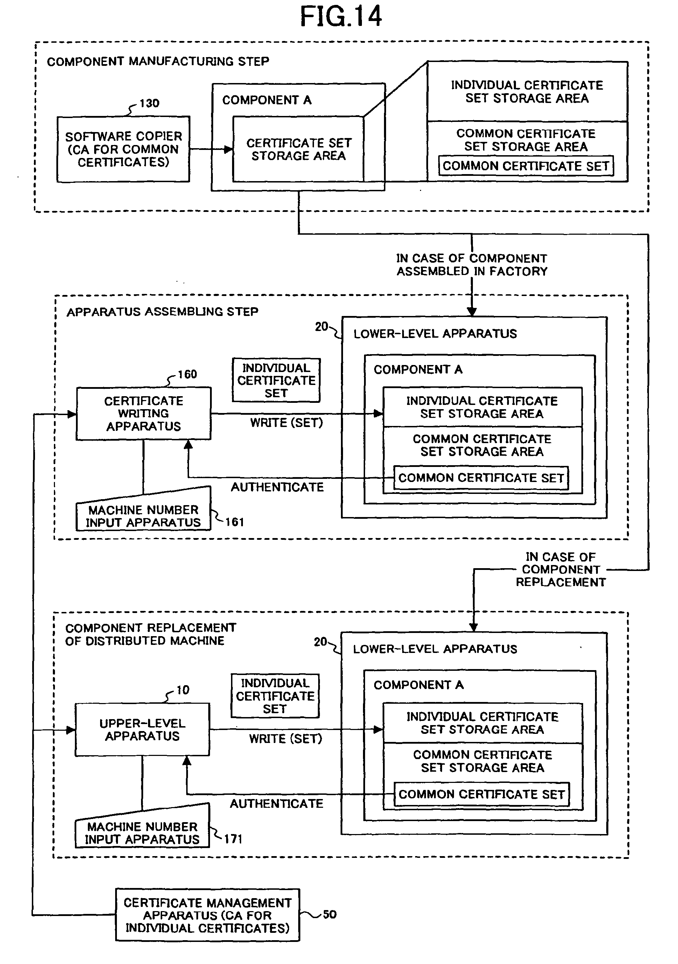

FIG. 14 is a diagram to explain exemplary steps of storing each certificate set in the component A according to a certificate setting method of the present invention.

Referring to FIG. 14, only a common certificate set is stored in the component A at a component manufacturing step, and no individual certificate set is stored herein. In this status, the component A is completed as a component available to assemble a new apparatus at the apparatus assembly step and as a replacement component (service parts) for an apparatus already sold in market.

In an apparatus assembly factory, after the component A is installed in an apparatus at the apparatus assembly step, the apparatus is examined. If the apparatus successfully passes the examination, a machine number is assigned to the apparatus. After the assignment, an individual certificate set is written and set in the component A by a certificate writing apparatus 160 working as a certificate setting apparatus.

In order to set the individual certificate set, a machine number information input apparatus 161 supplies the machine number information of the apparatus to the certificate writing apparatus 160. Then, the certificate writing apparatus 160 writes the supplied individual certificate set having the machine number information as identification information. This individual certificate set is issued by a certificate management apparatus 50 serving as CA to manage individual certificates.

Also, at this time, the certificate writing apparatus 160 is connected to the lower-level apparatus 20, and the certificate writing apparatus 160 requests communication to a rescue URL of the lower-level apparatus 20. In response to receipt of the communication request, the lower-level apparatus 20 uses the common certificate set in the lower-level apparatus 20 to perform authentication in accordance with SSL. Then, if the lower-level apparatus 20 authenticates the certificate writing apparatus 160 as an authorized apparatus, the certificate writing apparatus 160 sends to the lower-level apparatus 20 a certificate setting request together with the individual certificate set to be written in an individual certificate set storage area of the component A. In summary, the certificate writing apparatus 160 and the lower-level apparatus 20 use a common certificate to communicate each other, and the certificate writing apparatus 160 stores an individual certificate set in the lower-level apparatus 20 through the communication.

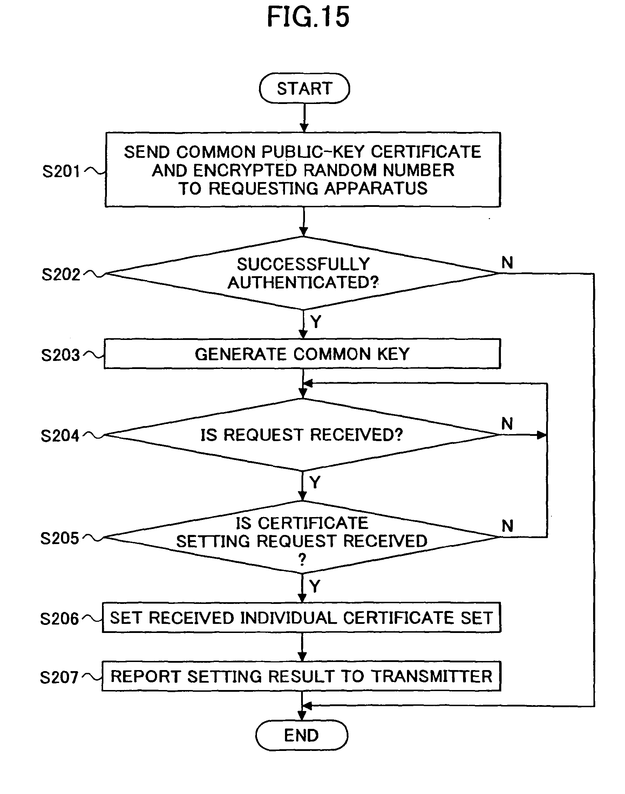

FIG. 15 is a flowchart of an exemplary procedure executed by the lower-level apparatus 20 to write an individual certificate set according to an embodiment of the present invention.

In response to receipt of a communication request via a rescue URL from a communicating party, the lower-level apparatus 20 starts the process shown in FIG. 15.

Referring to FIG. 15, the lower-level apparatus 20 sends a lower-level apparatus common public-key certificate to accept authentication from the communicating party (certificate writing apparatus 160) together with random number encrypted with a lower-level common private key to the communicating party at step S201.

In response to receipt of the authentication result, the lower-level apparatus 20 determines whether the authentication is successfully completed at step S202. If the authentication has not succeeded, the process is terminated. On the other hand, if the authentication has succeeded, the lower-level apparatus 20 generates a common key from a received seed of the common key at step S203 for use of subsequent communication.

Then, the lower-level apparatus 20 waits for receipt of a request at step S204. When the lower-level apparatus 20 receives a request, the process moves to step S205. As described with reference to FIG. 8, a request managing part 44 of the lower-level apparatus 20 permits only a certificate setting operation in case of authentication employing a common public-key certificate. Thus, the request managing part 44 determines whether the received request relates to a certificate setting request at step S205. If the received request is not a certificate setting request, the lower-level apparatus 20 ignores the request and moves back to step S204 to wait for the next request. In another embodiment, the lower-level apparatus 20 may return a response indicating that the request has not been accepted.

On the other hand, if the received request is a certificate setting request at step S205, the process moves to step S206. At step S206, the lower-level apparatus 20 stores the certificate set received together with the certificate setting request (obtained from the communicating party) in an individual certificate set storage area of the component A so as to set an individual certificate set illustrated in FIG. 10A therein. In this step, CPU 201 of the lower-level apparatus 20 serves as an individual certificate setting part.

Then, the lower-level apparatus 20 sends the setting result as a response to the communicating party, and the process is terminated.

Through the above process executed by the lower-level apparatus 20, the certificate writing apparatus 160 can at least check whether the individual certificate set is allowed to be written in the lower-level apparatus 20. As a result, it is possible to prevent the individual certificate set from being erroneously transmitted to a different apparatus and improve security in the certificate setting.

In another embodiment, the common certificate may be further stored in the certificate writing apparatus 160 so as to perform cross-certification between the certificate writing apparatus 160 and the lower-level apparatus 20 in the authentication process. In this case, the two common certificate sets stored in the upper-level apparatus 10 and the lower-level apparatus 20 are the same, and the upper apparatus 10 can perform an authentication process as in the above-mentioned process of the lower-level apparatus 20. Through the cross-certification, the lower-level apparatus 20 can prevent an unauthorized certificate writing apparatus from setting an individual certificate set therein.

Here, even if the certification writing apparatus 160 is simply authenticated by sending a common public-key certificate to the lower-level apparatus 20, the above-mentioned advantage is available. In addition, a secure communication path can be established between the certificate writing apparatus 160 and the lower-level apparatus 20 in accordance with SSL.

In another embodiment, the communication request may be issued to the certificate writing apparatus 160 by the lower-level apparatus 20. In this case, the certificate writing apparatus 160 and the lower-level apparatus 20 use a common public-key certificate to perform authentication. If the authentication has succeeded, the certificate writing apparatus 160 sends an individual certificate to the lower-level apparatus 20 so as to set the individual certificate as in the above-mentioned process.

Referring back to FIG. 14, on the other hand, if the component A is shipped as service parts and then is installed to a currently-operating lower-level apparatus 20 at installation location of the lower-level apparatus 20, an upper-level apparatus 10 corresponding to the lower-level apparatus 20 writes an individual certificate set. At this time, a machine number input apparatus 171 supplies a machine number of the apparatus to the upper-level apparatus 10. The upper-level apparatus 10 instructs the certificate management apparatus 50 to issue the individual certificate set including the machine number information as identification information. Then, the upper-level apparatus 10 sets the issued individual certificate set to the lower-level apparatus 20. Here, the identification information including the machine number may be sent from the lower-level apparatus 20 to the upper-level apparatus 10, in response to a request from the upper-level apparatus 10.

At this time, the upper-level apparatus 10 requests communication to the lower-level apparatus 20 via a rescue URL. In response to receipt of the communication request from the upper-level apparatus 10, the lower-level apparatus 20 uses a common certificate set stored therein to perform authentication in accordance with SSL. Then, if the lower-level apparatus 20 authenticates the upper-level apparatus 10 as an authorized apparatus, the upper-level apparatus 10 sends the individual certificate set to the lower-level apparatus 20 and causes the lower-level apparatus 20 to set the individual certificate set in an individual certificate set storage area of the component A. In this case, the upper-level apparatus 10 serves as a certificate setting apparatus. The upper-level apparatus 10 uses a common certificate to perform authentication to the lower-level apparatus 20. If the authentication has succeeded, the individual certificate set is stored in the lower-level apparatus 20.

In this case, the lower-level apparatus 20 performs the same process as that shown in FIG. 15. Of course, cross-certification may be performed. The cross-certification has the same advantage as in the case of writing by the certificate writing apparatus 160. However, since it is not known what apparatus may be connected to the component A after shipment thereof, there is a demand of higher security in this case of the shipped component A being installed to a currently-operating apparatus than the case of the component A being in a factory having limited connecting apparatuses. Here, one-directional authentication may be adopted in such a way that the lower-level apparatus 20 authenticates the upper-level apparatus 10. Alternatively, the lower-level apparatus 20 may request communication to the upper-level apparatus 10 as in the above-mentioned case of writing by the certificate writing apparatus 160.

As seen from the above description, according to the certificate setting method, it is possible to store an individual certificate set in the lower-level apparatus 20 in the same procedure as the time of production in a factory and parts replacement after distribution to market.

Also, a common certificate set stored in a component in advance is used to perform authentication, and if authentication succeeds, an individual certificate set is stored. Thus, it is possible to set the individual certificate set in the lower-level apparatus 20 securely even through communication via the communication I/F 25 configured as a normal network I/F. As a result, no I/F dedicated to set certificates has to be provided to the lower-level apparatus 20, and it is possible to reduce its fabrication cost.

Also, since such a network I/F may be often used during normal operation of the lower-level apparatus 20, the network I/F is usually mounted to the lower-level apparatus 20 in a status where the network I/F is exposed to the exterior of the body thereof. Thus, it is possible to set certificates easily in fabrication of the lower-level apparatus 20. In addition, since no special device and I/F may be used to set an individual certificate, it is possible to set the individual certificate easily as in the fabrication of the lower-level apparatus 20 in a factory of the vendor even after distribution to OEM manufacturers and market.

On the other hand, according to this embodiment, since a dedicated device is used to store a common certificate set in a component, it is possible to assure security, especially, without authentication. Also, when the component is not installed in an apparatus yet, a dedicated I/F can be easily disposed at a position where the dedicated I/F can be connected to the component. Thus, such a dedicated device can be used without much inconvenience.

As described with reference to FIG. 10 and FIG. 11, an individual public-key certificate is stored in the lower-level apparatus 20 in the communication system in the status where the machine number information thereof, which is used as identification information thereof, is attached in the individual public-key certificate as a portion of an individual certificate set). On the other hand, the machine number is usually assigned to the lower-level apparatus 20 after the lower-level apparatus 20 has been assembled and successfully passes quality examination so as to prevent the machine number from being unavailable due to failed examination. Thus, if a public-key certificate having the machine number information is stored in fabrication step of the lower-level apparatus 20, the public-key certificate has to be stored after completion of the assembly of the lower-level apparatus 20. In such a case, it is particularly useful to store the public-key certificate in the lower-level apparatus 20 via a normally operating interface such as PHY 206 as a network I/F. This is why it is difficult to configure or dispose a connection part of a special interface to facilitate the storage operation after assembly of the lower-level apparatus 20 because of constraints in terms of design, functionality and cost.

In the lower-level apparatus 20 described herein, an individual certificate set can be written therein via a network. Even after assembly of the lower-level apparatus 20 is completed, the individual can be written through connection to the certificate writing apparatus 160 via a connection I/F to a network cable, such as an Ethernet standard cable, exposed to the exterior of the body of the lower-level apparatus 20. Thus, it is possible to efficiently perform the writing task with less steps and smaller risk such as damage of the lower-level apparatus 20 during the operation. In addition, since communication can be encrypted during the writing step, it is possible to set the individual certificate set securely.

It is noted that the lower-level apparatus 20 may not be necessarily connected to the certificate writing apparatus 160 via the network I/F. Even if another I/F is used, it is possible to improve security of certificate setting by performing authentication with a common certificate stored in a component in order to set an individual certificate.

Also, in the case where some information other than machine number information is used as identification information of the lower-level apparatus 20, for example, in the case where another type of ID is used, an individual public-key certificate may not be stored after quality examination thereof. However, if the individual public-key certificate is stored after quality examination, it is possible to prevent number missing for identification information due to rejection of the quality examination of the lower-level apparatus 20 in which the certificate has been already stored. Thus, the certificate can be managed more easily.

Also, since individual certificates and common certificates have different applications and functionality, it is preferable that different CAs issue the individual certificate and the common certificates, respectively, as illustrated in FIG. 14.

Specifically, the same common certificate is stored in all apparatuses located at the same level. In this case, if a common root private key is leaked, it becomes difficult to maintain security. In prevent such a serious situation, it is necessary to maintain secret stringently. On the other hand, it is unnecessary to prepare separate certificates for individual apparatuses and store the created certificates in respective apparatuses. For this reason, it is preferable to use CA inaccessible from exterior thereof from the viewpoint of security.

On the other hand, individual certificates can be updated as needed. Thus, even if an individual root private key is leaked, it is possible to maintain the security by updating the corresponding individual certificate. Also, since certificates have to be created and stored for each apparatus, it is preferable to use CA connected to an open network such as the Internet.

Here, CAs may be further divided based on levels of apparatuses to which certificates are issued, such as CA issuing certificates of lower-level apparatuses and CA issuing certificates of upper-level apparatuses.

Also, individual certificates and common certificates may be digital certificates having totally different formats.

Exemplary equipment to set an individual certificate set in a lower-level apparatus 20 at the above-mentioned manufacturing step is described.

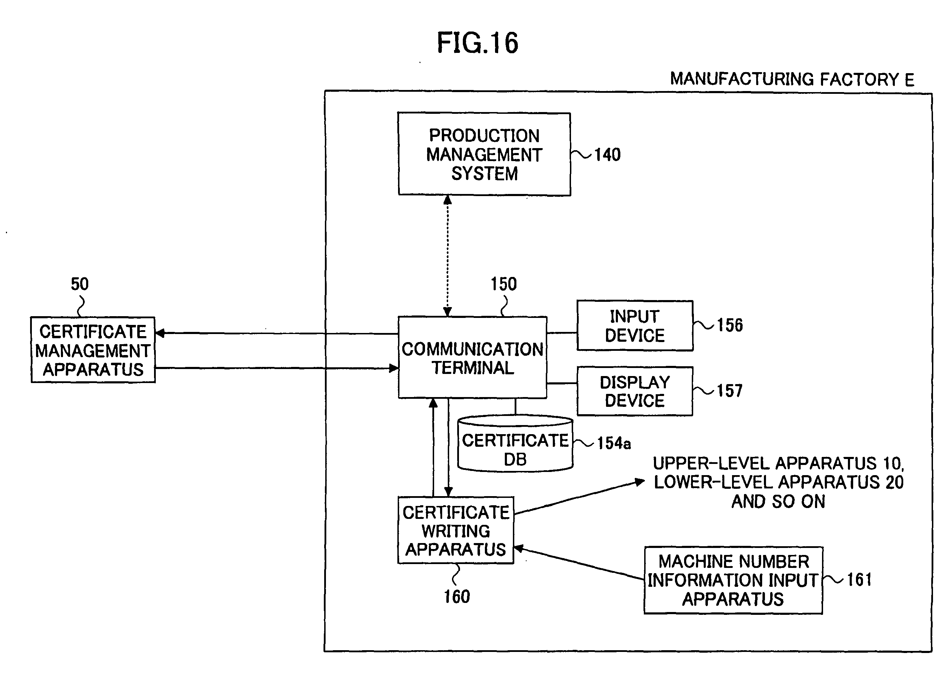

FIG. 16 is a block diagram illustrating an exemplary structure of components related to the setting of an individual certificate set.

Referring to FIG. 16, a manufacturing factory E to perform the apparatus assembly step includes a production management system 140, a communication terminal 150, and a certificate writing apparatus 160 as equipment to set an individual certificate set.

The production management system 140 manages the number of produced apparatuses, such as upper-level apparatuses 10 and lower-level apparatuses 20, in day-to-day base.

The communication terminal 150 includes a certificate database (DB) 154a, an input device 156 and a display device 157. From the production management system 140, the communication terminal 150 obtains the number of daily produced apparatuses for each apparatus type together with machine number information to be assigned (including machine type codes and serial numbers). Based on the information, the communication terminal 150 instructs the certificate management apparatus 50, which serves as CA to issue individual public-key certificates, to issue an individual certificate set to be stored in a produced apparatus, and stores the issued individual certificate set in the certificate DB 154a.

The certificate writing apparatus 160 includes a machine number input device 161, and accepts input of a machine number of a produced apparatus from the machine number information input device 161 during manufacturing of the apparatus. In response to receipt of the machine number, the certificate writing apparatus 160 obtains an individual certificate set associated with the machine number from the communication terminal 150. Then, the certificate writing apparatus 160 sends the obtained individual certificate set to the corresponding apparatus, and instructs the apparatus to set the received individual certificate set in an individual certificate set storage area in a non-volatile memory of the apparatus. For example, in production of a lower-level apparatus 20, the certificate writing apparatus 160 causes the lower-level apparatus 20 to set the individual certificate set in a storage area of a component A thereof.

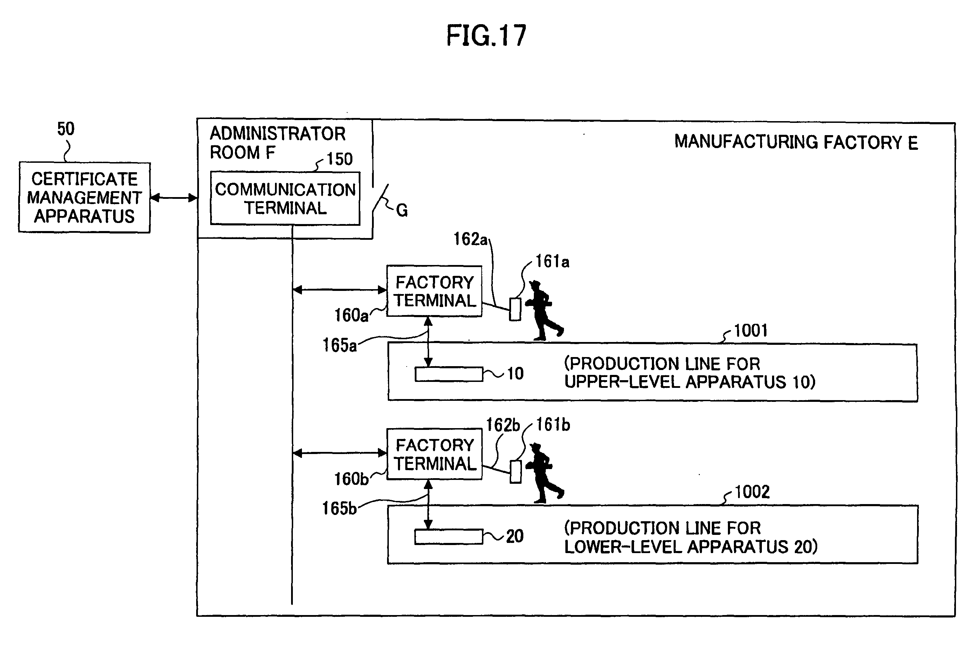

FIG. 17 schematically shows an exemplary circumference of the communication terminal 150 and the certificate writing apparatus 160 in the manufacturing factory E according to an embodiment of the present invention.

Referring to FIG. 17, the communication terminal 150 is provided in an administrator room F of the manufacturing factory E from the viewpoint of security. In order to allow only authorized administrators to enter the administrator room F, a door G of the administrator room F is locked. Also, only if certain ID and password are provided, one can operate the communication terminal 150.

In the illustration, a production line 1001 for upper-level apparatuses 10 and a production line 1002 for lower-level apparatuses 20 are provided in the manufacturing factory E. Also, the certificate writing apparatuses 160 (160a and 160b) are provided for the individual production lines.

The certificate writing apparatuses 160 are connected to respective machine number information input I/Fs 162 (162a and 162b) for connecting to the machine number information input devices 161 (161a and 161b) and respective writing I/Fs 165 (165a and 165b) for connecting to produced apparatuses (upper-level apparatuses 10 and lower-level apparatuses 20).

In such a production line, for example, when lower-level apparatuses 20 are produced, a rating plate is attached to a lower-level apparatus 20 that has passed quality examination synchronously with assignment of an ID number.

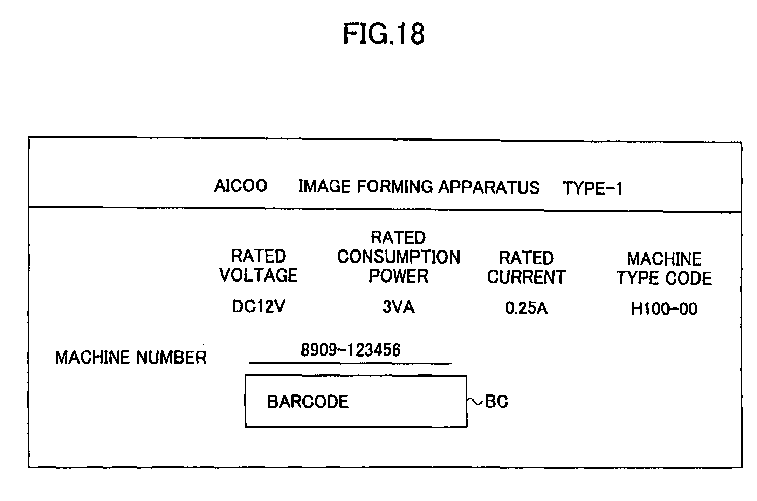

FIG. 18 shows an exemplary rating plate attached to a communication apparatus according to an embodiment of the present invention.

Referring to FIG. 18, a rating plate includes the machine number together with information items, such as a rated voltage and a consumption power. In addition the rating plate has a barcode BC indicative of the machine number information.

At a step of setting an individual certificate set, first, the certificate writing apparatus 160 is connected to a lower-level apparatus 20, to which an individual certificate set is to be set, by using an Ethernet-based cross-cable as the writing I/F 165. Such a cross-cable is used because of the following reason. Namely, produced apparatuses initially have the same IP address, and if these apparatuses are connected to the certificate writing apparatus 160 via LAN, the IP address is duplicated.

Then, a barcode reader is used as the machine number information input device 161 to read a barcode BC on a rating plate and supply machine number information on a target apparatus to the certificate writing apparatus 160. In response to receipt of the machine number information from the barcode reader, the certificate writing apparatus 160 obtains an individual certificate set associated with the machine number from the communication terminal 150, and sends the individual certificate set to a lower-level apparatus 20 connected via the writing I/F 165 to set the individual certificate set in an individual certificate set storage area of a component A of the apparatus.

Through the above process and operation, it is possible to easily store an individual public-key certificate, to which machine number information is attached as identification information of each produced lower-level apparatus 20, to the lower-level apparatus 20.

In the above-mentioned embodiment, the case where authentication between apparatuses, such as an upper-level apparatus 10 and a lower-level apparatus 20, is performed in accordance with conventional SSL has been described. However, the present invention is not limited to this embodiment. The present invention is applicable to a case where authentication is based on another protocol TLS (Transport Layer Security), which is designed by improving SSL.

In the above-mentioned embodiment, an individual certificate having identification information of an apparatus and a common certificate having no identification information of an apparatus are used. It can be considered that the former is a highly secure certificate and the latter is a moderately secure certificate.

In general, a highly secure certificate is required to have much information. Alternatively, a special authentication program must be installed in such a highly secure certificate due to limitation on exports. For these reasons, it may be difficult to use the highly secure certificate for authentication by storing the highly secure certificate in all apparatuses because of limited available environments thereof. On the other hand, a moderately secure certificate is not relatively limited, and can be easily used for authentication by storing the common certificate in all apparatuses.

For this reason, it may be desired that certificates can be set as follows. Namely, first, a certificate having a relatively low security level is stored in an apparatus, and the apparatus is shipped. Then, a certificate having a high security level can be set later depending on use environment thereof. In this case, the above-mentioned embodiment is available. Specifically, a component, in which a certificate having a relatively low security level is stored, is mounted to a communication apparatus, and then the certificate is used to perform authentication between the communication apparatus and a certificate setting apparatus. If the authentication is successfully completed, the certificate setting apparatus causes the communication apparatus to store a certificate having a high security level therein. According to this embodiment, even if a certificate having a high security level is set in a communication apparatus after fabrication and shipment thereof, it is possible to set the certificate easily and securely.

Also, in the above-mentioned embodiment, the certificate management apparatus 50 is provided separately from an upper-level apparatus 10. The present invention is not limited to the configuration, and the certificate management apparatus 50 may be provided integrally with the upper-level apparatus 10. In this case, individual components to implement functionality of the certificate management apparatus 50, such as CPU, ROM and RAM, may be provided separately from those of the upper-level apparatus 10. Alternatively, the certificate management apparatus 50 may use CPU, ROM, RAM or the like of the upper-level apparatus 10 to perform functionality thereof by causing CPU of the upper-level apparatus 10 to execute suitable software.

In these cases, communication between the certificate management apparatus 50 and the upper-level apparatus 10, which is configured integrally with the certificate management apparatus 50, includes an interprocess communication between a process to cause some hardware items to serve as the certificate management apparatus 50 and a process to cause some hardware items to serve as the upper-level apparatus 10.

Furthermore, in the above-mentioned embodiment, the certificate management apparatus 50 creates a root key and a digital certificate by itself. However, the certificate management apparatus 50 may obtain a root key and a digital certificate from another apparatus.

Also, in the above-mentioned embodiment, the communication system is configured to have only at least one upper-level apparatus 10 and at least one lower-level apparatus 20. However, the present invention is not limited to the configuration, such as inclusion of another type of apparatus. For example, an intermediate apparatus is provided in the communication system to arbitrate communication between the upper-level apparatus 10 and the lower-level apparatus 20 so that the upper-level apparatus 10 and the lower-level apparatus 20 can send and receive requests and responses via the intermediate apparatus. In another embodiment, a further upper-level apparatus may be provided at a level higher than that of the upper-level apparatus 10. In this case, if the upper-level apparatus 10 is considered as a "lower-level apparatus" and the further upper-level apparatus 10 is considered as an "upper-level apparatus", this configuration can be dealt with similarly to the above-mentioned embodiment.

Also, some remote management systems have been conventionally proposed. For example, a remote management system is configured to remotely manage a managed apparatus, which is implemented as an image processing apparatus having a communication function, such as a printer, a FAX machine, a digital copier, a scanner and a digital multifunctional peripheral, by using a managing apparatus that can communicate to the managed apparatus.

For example, an ordinary image processing apparatus having an image forming function forms an image on a plain paper in accordance with electrostatic photocopy technology. There is a relatively high probability that a mechanism to implement the electrostatic photocopy technology may malfunction. Furthermore, a maintenance and management system is established to conduct periodical overhaul of an image processing apparatus to maintain the performance thereof

In order to enrich such maintenance and management, a remote management system having an image forming apparatus as a managed apparatus already has been developed and operated. In such a remote management system, a communication apparatus is provided in the exterior or interior of the image forming apparatus, and the image forming apparatus is connected to a managing apparatus located in a service center (management center) via a public line (telephone line). When an error is detected in the image processing apparatus, the error is reported to the managing apparatus.

In the above-mentioned embodiment, the present invention is applicable a case where a digital certificate is set in the managed apparatus of such a remote management system. In this case, the managed apparatus may be considered as a lower-level apparatus, and a managing apparatus that manages the managed apparatus or an apparatus that gathers information on a plurality of managed apparatuses in a user environment may be considered as an upper-level apparatus.

In remote management, an operator of a managing apparatus is not often near a managed apparatus. Thus, it is necessary to identify the managed apparatus through communication. Also, it is necessary to design a scheme to guarantee that the identified apparatus is the apparatus of interest. Thus, it is highly advantageous that an individual public-key certificate can be easily set during fabrication thereof and after installation to a user environment and that the individual public-key certificate can be used for highly reliable authentication, as described in the above-mentioned embodiment.

It is noted that an apparatus to be remotely managed is not limited to an image processing apparatus. The managed apparatus may be a communication apparatus designed to provide a communication function to various types of electric apparatuses, such as network consumer electronics, vending machines, medical equipment, ventilation systems, measurement systems for gas services, water services and electric power service, automobiles, aircrafts and general-purpose computers. It is noted that the lower-level apparatus 20 is not limited to the managed apparatus in a remote management system.

According to the above-mentioned certificate setting method, it is possible to set a digital certificate having identification information of a communication apparatus thereto easily and securely. Thus, it is possible to easily manufacture a communication apparatus using a digital certificate, to which the identification information thereof is attached, and operate a communication system including such an apparatus with high reliability.

The present invention is not limited to the specifically disclosed embodiments, and variations and modifications may be made without departing from the scope of the present invention.

## Claims

1. A method of setting a digital certificate available to authentication in a communication apparatus by using a certificate setting apparatus, the communication apparatus and the certificate setting apparatus each having a normal authentication means for authentication by means of individual certificates and a rescue authentication means for authentication by means of common certificates, the method comprising:
mounting a component having a common certificate to the communication apparatus;
performing rescue authentication between the certificate setting apparatus and the communication apparatus by using the common certificate, and when the authentication succeeds, using the certificate setting apparatus to cause the communication apparatus to store an individual certificate therein,
wherein the common certificate is a digital certificate without identification information of the communication apparatus, and the individual certificate is a digital certificate with identification information of the communication apparatus;
and thereafter performing normal authentication using the individual certificate.

2. The method as claimed in claim 1, further including a step of:
examining quality of the communication apparatus after the mounting step,
wherein when the communication apparatus successfully passes the examination, the authentication step is performed on the communication apparatus.

3. The method as claimed in claim 2, further including a step of:
assigning identification information to the successfully passing communication apparatus before the authentication step,
wherein the individual certificate comprises the identification information assigned to the communication apparatus.

4. The method as claimed in claim 3, **characterized in that** the identification information comprises at least one of a production number and a serial number.

5. The method as claimed in claim 1, **characterized in that** the individual certificate is stored via an interface exposed to an exterior of a body of the communication apparatus.

6. The method as claimed in claim 5, **characterized in that** the interface comprises a connector to connect an Ethernet based communication cable.

7. The method as claimed in any of claims 1 to 6, **characterized in that** the authentication follows at least one of SSL protocol and TLS protocol.

## Patentansprüche

1. Verfahren zum Setzen eines digitalen Zertifikats durch Verwenden einer Zertifikatsetzvonichtung, so dass es zur Authentifizierung in einer Kommunikationsvorrichtung verfügbar ist, wobei die Kommunikationsvorrichtung und die Zertifikatsetzvorrichtung jeweils ein normales Authentifizierungsmittel für die Authentifizierung mittels individueller Zertifikate und ein Rettungsauthentifizierungsmittel für die Authentifizierung mittels gemeinsamer Zertifikate aufweisen, wobei das Verfahren umfasst:
Anbringen einer Komponente mit einem gemeinsamen Zertifikat an der Kommunikationsvorrichtung;
Durchführen einer Rettungsauthentifizierung zwischen der Zertifikatsetzvorrichtung und der Kommunikationsvorrichtung durch Verwenden des gemeinsamen Zertifikats, und wenn die Authentifizierung erfolgreich ist, Verwenden der Zertifikatsetzvorrichtung, um zu bewirken, dass die Kommunikationsvorrichtung ein individuelles Zertifikat darin speichert,
wobei das gemeinsame Zertifikat ein digitales Zertifikat ohne Identifizierungsinformation der Kommunikationsvorrichtung ist und das individuelle Zertifikat ein digitales Zertifikat mit Identifizierungsinformation der Kommunikationsvorrichtung ist;
und danach Durchführen normaler Authentifizierung unter Verwendung des individuellen Zertifikats.

2. Verfahren nach Anspruch 1, ferner einen Schritt aufweisend:
Prüfen der Qualität der Kommunikationsvorrichtung nach dem Anbringungsschritt,
wobei, wenn die Kommunikationsvorrichtung die Prüfung erfolgreich besteht, der Authentifizierungsschritt an der Kommunikationsvorrichtung durchgeführt wird.

3. Verfahren nach Anspruch 2, ferner einen Schritt aufweisend:
Zuweisen von Identifizierungsinformation zu der erfolgreich bestehenden Kommunikationsvorrichtung vor dem Authentifizierungsschritt,
wobei das individuelle Zertifikat die der Kommunikationsvorrichtung zugewiesene Identifizierungsinformation umfasst.

4. Verfahren nach Anspruch 3, **dadurch gekennzeichnet, dass** die Identifizierungsinformation mindestens eine der folgenden umfasst: eine Produktionsnummer und eine Seriennummer.

5. Verfahren nach Anspruch 1, **dadurch gekennzeichnet, dass** das individuelle Zertifikat mittels einer Schnittstelle gespeichert wird, die einer äußeren Umgebung eines Gehäuses der Kommunikationsvorrichtung ausgesetzt ist.

6. Verfahren nach Anspruch 5, **dadurch gekennzeichnet, dass** die Schnittstelle einen Verbinder umfasst, um ein Kabel für ethemetgestützte Kommunikation anzuschließen.

7. Verfahren nach einem der Ansprüche 1 bis 6, **dadurch gekennzeichnet, dass** die Authentifizierung mindestens einem der folgenden genügt: ein SSL-Protokoll und ein TLS-Protokoll.

## Revendications

1. Procédé destiné à définir un certificat numérique disponible en vue d'une authentification au sein d'un dispositif de communication, en utilisant un dispositif de définition de certificats, le dispositif de communication et le dispositif de définition de certificats présentant chacun un moyen d'authentification conventionnel en vue d'une authentification par le biais de certificats individuels, et un moyen d'authentification de secours en vue d'une authentification par le biais de certificats communs, le procédé comprenant les étapes ci-dessous consistant à :
installer un composant présentant un certificat commun au niveau du dispositif de communication ;
mettre en oeuvre une authentification de secours entre le dispositif de définition de certificats et le dispositif de communication en utilisant le certificat commun, et lorsque l'authentification réussit, utiliser le dispositif de définition de certificats pour amener le dispositif de communication à stocker un certificat individuel ;
dans lequel le certificat commun est un certificat numérique sans informations d'identification du dispositif de communication, et le certificat individuel est un certificat numérique avec informations d'identification du dispositif de communication; et
mettre ensuite en oeuvre une authentification conventionnelle en utilisant le certificat individuel.

2. Procédé selon la revendication 1, comprenant en outre une étape consistant à :
examiner la qualité du dispositif de communication à l'issue de l'étape d'installation ;
dans lequel, lorsque le dispositif de communication réussit à l'étape d'examen, l'étape d'authentification est mise en oeuvre sur le dispositif de communication,

3. Procédé selon la revendication 2, comprenant en outre une étape consistant à :
affecter des informations d'identification au dispositif de communication ayant réussi à l'étape d'examen, avant l'étape d'authentification ;
dans lequel le certificat individuel comprend les informations d'identification affectées au dispositif de communication.

4. Procédé selon la revendication 3, **caractérisé en ce que** les informations d'identification comportent au moins l'un parmi un numéro de production et un numéro de série.

5. Procédé selon la revendication 1, **caractérisé en ce que** le certificat individuel est stocké via une interface exposée à l'extérieur d'un corps du dispositif de communication.

6. Procédé selon la revendication 5, **caractérisé en ce que** l'interface comporte un connecteur pour connecter un câble de communication basé sur Ethernet.

7. Procédé selon l'une quelconque des revendications 1 à 6, **caractérisé en ce que** l'authentification suit au moins l'un parmi un protocole SSL et un protocole TLS.
